# EUROPEAN PATENT SPECIFICATION

(11) **EP 2 827 433 B1**
(45) Date of publication and mention of the grant of the patent: **25.09.2019**
(21) Application number: 13760900.4
(22) Date of filing: 13.03.2013
(51) Int. Cl.: H01M 10/052, H01M 10/0567, H01M 10/0568, H01M 10/0569, H01M 4/505

(54) **SECONDARY BATTERY ELECTROLYTE AND SECONDARY BATTERY USING SAME**
SEKUNDÄRBATTERIEELEKTROLYT UND SEKUNDÄRBATTERIE DAMIT
ÉLECTROLYTE DE BATTERIE RECHARGEABLE ET BATTERIE RECHARGEABLE UTILISANT LEDIT ÉLECTROLYTE

(30) Priority: 13.03.2012 JP 2012055907
(43) Date of publication of application: 21.01.2015
(73) Proprietor: Envision AESC Energy Devices Ltd., Sagamihara-shi, Kanagawa (JP)
(72) Inventor: SUZUKI, Takayuki;, Kanagawa 252-0254 (JP); KANEKO, Shinako, Kanagawa 252-0254 (JP)
(74) Representative: Vossius & Partner Patentanwälte Rechtsanwälte mbB
(86) International application number: PCT/JP2013/057083
(87) International publication number: WO 2013/137351

(56) References cited:
- WO-A1-2011/152534
- WO-A1-2012/017998
- WO-A1-2012/017998
- JP-A- 2011 165 553
- JP-A- 2012 033 346
- US-A1- 2010 062 332

## Description

### Technical Field

This exemplary embodiment relates to a non-aqueous electrolytic solution for a lithium ion secondary battery and a secondary battery using the same.

### Background Art

Lithium ion secondary batteries have the features of small size and large capacity and are widely used as power supplies for portable equipment, such as cellular phones and notebook computers. Recently, the application of lithium ion secondary batteries has also been studied to automobiles, such as HEVs and EVs, and large-size apparatuses, such as power storage apparatuses, and the development of lithium ion secondary batteries has been promoted. As the cycle life of secondary batteries in these uses, a long life of 10 years or more is required, but even longer life is demanded by the market.

As methods for solving this problem, various methods are proposed. Patent Literatures 1 and 2 disclose that by mixing 1,3-propane sultone, vinylene carbonate, or the like in a nonaqueous electrolytic solution to control a film referred to as a surface film, a protective film, an SEI (Solid Electrolyte Interface), a coating, or the like (hereinafter also shown as a "surface film") formed on an electrode surface, battery characteristics, such as, a self-discharge rate, are improved. In addition, Patent Literature 3 discloses that by adding a cyclic sulfonate to an electrolytic solution, a coating is formed on a negative electrode surface, and cycle life is improved. In addition, Patent Literature 4 discloses that by adding a disulfonic acid compound to an electrolytic solution, chemical stability increases, and cycle life is improved.

On the other hand, in order to prevent the dissolution of substances forming an electrode, such as an active material, in an electrolytic solution, techniques for forming a coating on an electrode surface are studied. For example, in a secondary battery using Mn spinel as a positive electrode active material, Mn dissolved from the positive electrode may be deposited on the negative electrode. Therefore, attempts are made to prevent the dissolution of an active material in an electrolytic solution by adding an additive to the electrolytic solution. For example, Non Patent Literature 1 discloses that in the case of using Mn spinel as a positive electrode active material and lithium-bis(oxalato)borate (hereinafter shown as LiBOB) as an electrolyte, when the amount of Mn deposited on the negative electrode after storage at 55°C for one month was examined, Mn deposition was more substantially suppressed than in the case of using LiPF₆ as an electrolyte, and the effect of suppressing the resistance increase of the SEI on the negative electrode surface was confirmed.

But, when LiBOB is used, the amount of gas generated is larger than when other electrolytes are used, and it is difficult to stably use the secondary battery for a long period. For this problem, Patent Literature 5 discloses that by the use of a disulfonate and LiBOB in combination, a stable mixed coating of these compounds is formed on an electrode, and the dissolution of the active material in the electrolytic solution and the decomposition of the electrolytic solution can be suppressed. Further, Patent Literature 5 discloses that by the synergistic action of these compounds, gas generation due to LiBOB is effectively suppressed, and thus, the cycle characteristics are good, and resistance increase in storage can be suppressed. In addition, Patent Literature 6 discloses the use of a disulfonate, and Patent Literatures 7 and 8 disclose the use of methylenebis sulfonate derivatives.
US 2010/062332 A1 discloses electrolyte additives for lithium ion secondary batteries containing a compound according to the below formula (1).

### Citation List

Patent Literature 1: JP63-102173A
Patent Literature 2: JP4-169075A
Patent Literature 3: JP2004-281368A
Patent Literature 4: JP2011-238373A
Patent Literature 5: JP2006-244776A
Patent Literature 6: JP2005-203342A
Patent Literature 7: International Publication No. WO 2012/017998
Patent Literature 8: International Publication No. WO 2012/017999

Non Patent Literature 1: The 12th Internatinal Meeting on Lithium Batteries, Abs. 51 (2004).

### Summary of Invention

### Technical Problem

Patent Literature 5 discloses that gas generation due to LiBOB can be suppressed by the addition of a chain disulfonate to an electrolytic solution. But, at high temperature, a gas due to a chain disulfonate is generated, and a technique for suppressing this is not disclosed. In addition, the technique is not described in other related art literatures described above either. It is an object of this exemplary embodiment to provide a secondary battery having excellent charge and discharge efficiency, good cycle characteristics, and a high capacity retention rate.

### Solution to Problem

A non-aqueous electrolytic solution for a lithium ion secondary battery according to this exemplary embodiment contains at least an aprotic solvent, a compound represented by the following formula (1), and a compound represented by the following formula (2). 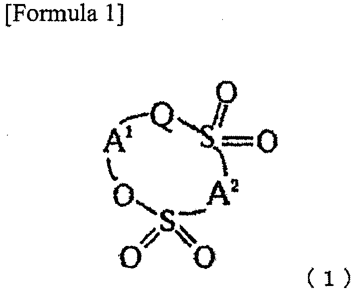 wherein Q represents an oxygen atom, a methylene group, or a single bond; A¹ represents an alkylene group having 1 to 5 carbon atoms, a carbonyl group, a sulfinyl group, a fluoroalkylene group having 1 to 6 carbon atoms, or a divalent group having 2 to 6 carbon atoms bonded to an alkylene unit or a fluoroalkylene unit via an ether bond; and A² represents an alkylene group, a fluoroalkylene group, or an oxygen atom, 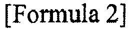 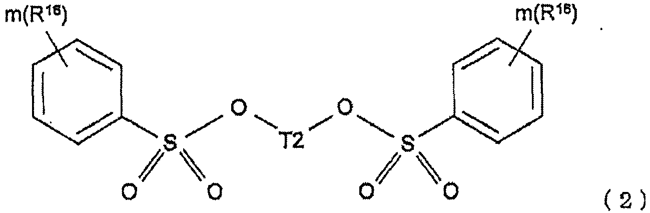 wherein T2 represents an alkylene group (CH₂)ₙ, and n is an integer of 1 to 4; and m(R¹⁶) each independently represents a halogen atom, an alkyl group having 1 to 6 carbon atoms, a haloalkyl group having 1 to 6 carbon atoms, an alkenyl group having 2 to 8 carbon atoms, an alkynyl group having 2 to 8 carbon atoms, or an aryl group, and m is each an integer of 0 to 3, wherein the content of the compouond represented by the formula (2) in the electrolytic solution is 0.05% by mass or more and 1% by mass or less and the compound of formula (2) is selected from compound nos. 202 to 210, 219, 228 to 240 and 253 to 256 shown in Tables 2, 2a, 3 and 4.
A lithium ion secondary battery according to this exemplary embodiment includes a positive electrode, a negative electrode, and the non-aqueous electrolytic solution according to this exemplary embodiment. In the present invention, the electrolytic solution is a non-aqueous solution and the secondary battery is a lithium ion secondary battery.

### Advantageous Effect of invention

According to the electrolytic solution for a secondary battery according to this exemplary embodiment, a secondary battery having excellent charge and discharge efficiency, good cycle characteristics, and a high capacity retention rate can be provided.

### Brief Description of Drawings

Figure 1 is a cross-sectional view showing the schematic structure of one example of a secondary battery according to the present invention.
Figure 2 shows a (a) top view and (b) side view of the positive electrode of one example of the secondary battery according to the present invention.
Figure 3 shows a (a) top view and (b) side view of the negative electrode of one example of the secondary battery according to the present invention.
Figure 4 is a cross-sectional view showing one example of the secondary battery according to the present invention.
Figure 5 shows diagrams showing the results of negative electrode surface energy-dispersive X-ray analysis (EDX) after cycles for secondary batteries in Comparative Example 6, Comparative Example 8, and Example 1.
Figure 6 shows diagrams showing the results of analyzing a positive electrode surface before and after cycle tests using X-ray photoelectron spectroscopy (XPS) for secondary batteries in Example 1, Comparative Example 1, Comparative Example 6, and Comparative Example 8.
Figure 7 shows diagrams showing the results of analyzing a negative electrode surface before and after the cycle tests using X-ray photoelectron spectroscopy (XPS) for the secondary batteries in Example 1, Comparative Example 1, Comparative Example 6, and Comparative Example 8.
Figure 8 is a diagram showing changes in peak intensity around 164 eV in the X-ray spectrum of the positive electrode surface before and after the cycle tests in the secondary batteries in Example 1, Comparative Example 1, Comparative Example 6, and Comparative Example 8.
Figure 9 is a diagram showing changes in peak intensity around 162 eV in the X-ray spectrum of the negative electrode surface before and after the cycle tests in the secondary batteries in Example 1, Comparative Example 1, Comparative Example 6, and Comparative Example 8.

### Description of Embodiment

### [Electrolytic Solution]

An electrolytic solution for a secondary battery (hereinafter also shown as an electrolytic solution) according to this exemplary embodiment contains at least an aprotic solvent, the compound represented by the above formula (1), and the compound represented by the above formula (2).

The present inventors have studied diligently and, as a result, found that by adding the compound represented by the above formula (1), and the compound represented by the above formula (2) as an alternative to LiBOB to an electrolytic solution, stable mixed coatings of these compounds are formed on electrodes, and the dissolution of the active materials in the electrolytic solution and the decomposition of the electrolytic solution are suppressed. Further, the present inventors have found that by the synergistic action of these compounds, the compound represented by the above formula (1) effectively suppresses gas generation due to the compound represented by the above formula (2), and the compound represented by the above formula (2) also suppresses gas generation due to the compound represented by the above formula (1).

In other words, according to this exemplary embodiment, by using an electrolytic solution for a secondary battery containing an aprotic solvent and the compounds represented by the above formulas (1) and (2), it is possible to provide a secondary battery having excellent discharge capacity and cycle characteristics, in which stable and uniform coatings are formed on positive and negative electrode surfaces, the dissolution of the positive electrode active material, such as manganese, in the electrolytic solution is suppressed, and the decomposition of the electrolytic solution is suppressed.

### (Aprotic Solvent)

As the aprotic solvent, at least one organic solvent selected from the group consisting of cyclic carbonates, chain carbonates, aliphatic carboxylates, γ-lactones, cyclic ethers, chain ethers, and fluorinated derivatives thereof can be used. More specific examples include cyclic carbonates, such as propylene carbonate (PC), ethylene carbonate (EC), butylene carbonate (BC), and derivatives thereof; chain carbonates, such as dimethyl carbonate (DMC), diethyl carbonate (DEC), ethyl methyl carbonate (EMC), dipropyl carbonate (DPC), and derivatives thereof; aliphatic carboxylates, such as methyl formate, methyl acetate, ethyl propionate, and derivatives thereof; γ-lactones, such as γ-butyrolactone and derivatives thereof; cyclic ethers, such as tetrahydrofuran, 2-methyltetrahydrofuran, and derivatives thereof; chain ethers, such as 1,2-diethoxyethane (DEE), ethoxymethoxyethane (EME), diethyl ether, and derivatives thereof; dimethyl sulfoxide, 1,3-dioxolane, formamide, acetamide, dimethylformamide, acetonitrile, propionitrile, nitromethane, ethyl monoglyme, phosphate triester, trimethoxymethane, dioxolane derivatives, methylsulfolane, 1,3-dimethyl-2-imidazolidinone, 3-methyl-2-oxazolidinone, anisole, N-methylpyrrolidone, and fluorinated carboxylates. One of these can be used, or two or more of these can be mixed and used.

### (Additives)

According to this exemplary embodiment, by applying an electrolytic solution in which at least the compound represented by the above formula (1) and the compound represented by the above formula (2) are included in an aprotic solvent, it is possible to obtain an electrolytic solution for a secondary battery that, by the synergistic effect of the compounds represented by the above formulas (1) and (2), has better charge and discharge efficiency, resistance increase suppression effect, gas generation suppression effect, and cycle characteristics than when each of these compounds is added alone to an electrolytic solution.

In the above formula (1), A¹ is preferably a group selected from an alkylene group having 1 to 5 carbon atoms, a polyfluoroalkylene group having 1 to 5 carbon atoms, a fluoroalkylene group having 1 to 5 carbon atoms, a group in which at least one C-C bond in an alkylene group having 1 to 5 carbon atoms is a C-O-C bond, a group in which at least one C-C bond in a polyfluoroalkylene group having 1 to 5 carbon atoms is a C-O-C bond, and a group in which at least one C-C bond in a fluoroalkylene group having 1 to 5 carbon atoms is a C-O-C bond, from the viewpoint of the stability of the compound, the ease of synthesis of the compound, solubility in the solvent, price, and the like. A group selected from an alkylene group having 1 to 5 carbon atoms, a polyfluoroalkylene group having 1 to 5 carbon atoms, and a fluoroalkylene group having 1 to 5 carbon atoms is more preferred, an alkylene group having 1 to 5 carbon atoms is further preferred, and a methylene group, an ethylene group, or a 2,2-propanediyl group is particularly preferred. The above fluoroalkylene group having 1 to 5 carbon atoms preferably includes a methylene group and a difluoromethylene group and is more preferably composed of a methylene group and a difluoromethylene group.

In addition, for a similar reason, A² is preferably an alkylene group having 1 to 5 carbon atoms, more preferably a methylene group, a 1,1-ethanediyl group, or a 2,2-propanediyl group.

In the above formula (2), examples of T2 include a methylene group, an ethylene group, a n-propylene group, and a n-butylene group. The n of the (CH₂)ₙ of T2 can be 2 to 4. As R¹⁶, F, Cl, a methyl group, an ethyl group, a n-propyl group, a n-butyl group, a phenyl group, and the like are preferred.

Here, reactivity with the compounds including the electrolytic solution when potential is applied to electrodes is shown below based on results derived from molecular orbital calculation. The compound represented by the above formula (1) has two sulfonyl groups, has a small LUMO, and is easily reduced. For example, the LUMO of compound No. 1 is as small as -1.8 eV. On the other hand, the compound represented by the above formula (2) is a compound easily subjected to an oxidation reaction and a reduction reaction. For example, the LUMO and HOMO of compound No. 201 (methylenebis(benzenesulfonate)) are -2.4 eV and -9.95 eV, respectively.

The compounds represented by the above formulas (1) and (2) have a smaller LUMO than the aprotic solvent containing a cyclic carbonate or a chain carbonate (for example, the LUMO and HOMO in ethylene carbonate are 1.2 eV and -11.8 eV, respectively) in this manner, and it is considered that reduced coatings are formed on a negative electrode before the solvent. In addition, the compound represented by the above formula (2) has a lower LUMO than the compound represented by the above formula (1), and therefore, it is also considered that in view of the LUMO, the compound represented by the above formula (2) more easily forms reduced coatings on electrodes (a positive electrode and a negative electrode) than the compound represented by the above formula (1) and is advantageous.

Therefore, by adding the compounds represented by the above formulas (1) and (2) to an electrolytic solution, gas generation in a secondary battery is suppressed by interaction with both these compounds, and more stable mixed coatings of the compounds represented by the above formula (1) and the above formula (2) can be formed on electrodes. Particularly, the HOMO is large, and it is considered that coating formation on a positive electrode by an oxidation reaction is easy. As a result, an excellent secondary battery having excellent charge and discharge efficiency, good cycle characteristics, and a high capacity retention rate can be provided.

Specific examples of the compound represented by the above formula (1) are listed below, but this exemplary embodiment is not limited to these.

### [Table 1]

**[Table 1]**

| **Compound No.** | **Chemical Structure** | **Compound No.** | **Chemical Structure** | **Compound No.** | **Chemical Structure** | **Compound No.** | **Chemical Structure** |
|---|---|---|---|---|---|---|---|
| 1 | 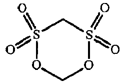 | 8 | 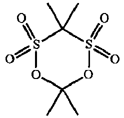 | 15 | 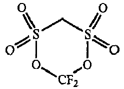 | 22 | 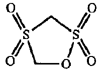 |
| 2 | 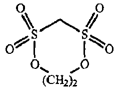 | 9 | 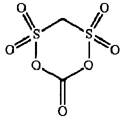 | 16 | 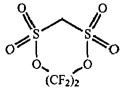 | | |
| 3 | 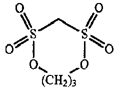 | 10 | 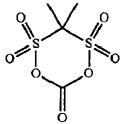 | 17 | 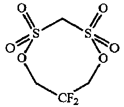 | | |
| 4 | 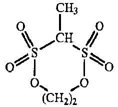 | 11 | 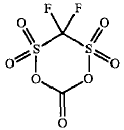 | 18 | 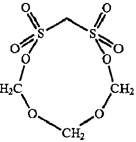 | | |
| 5 | 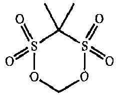 | 12 | 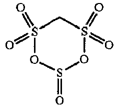 | 19 | 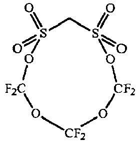 | | |
| 6 | 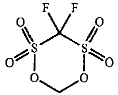 | 13 | 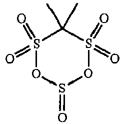 | 20 | 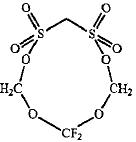 | | |
| 7 | 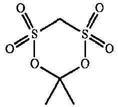 | 14 | 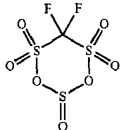 | 21 | 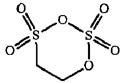 | | |

Preferably 0.1% by mass or more and 5% by mass or less, more preferably 0.5% by mass or more and 2% by mass or less, of the compound represented by the above formula (1) is included in the electrolytic solution. When the compound represented by the above formula (1) is included in the electrolytic solution in these concentration ranges, a sufficient effect is exerted on coating formation on electrode surfaces by electrochemical reactions, and the viscosity of the electrolytic solution can be kept in a range preferred for use. The compounds represented by the above formula (1) can be used alone, or a plurality of the compounds represented by the above formula (1) can be used in combination.

In addition, the compounds represented by the above formula (2) according to the present invention are shown below.

### [Table 2]

**[Table 2]**

| **Compound No.** | **Chemical Structure** | **Compound No.** | **Chemical Structure** |
|---|---|---|---|
| **201** | 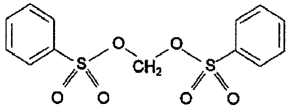 | **210** | 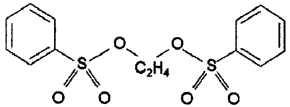 |
| **202** | 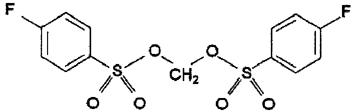 | **211*** | 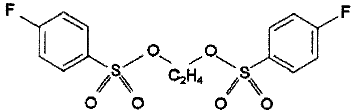 |
| **203** | 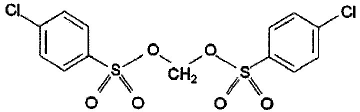 | **212*** | 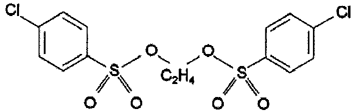 |
| **204** | 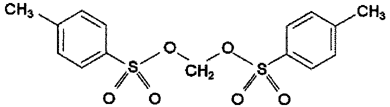 | **213*** | 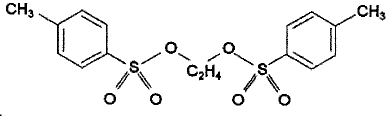 |
| **205** | 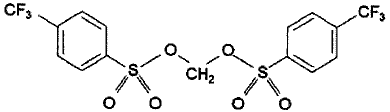 | **214*** | 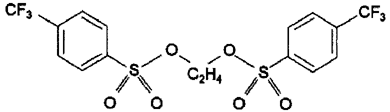 |
| **206** | 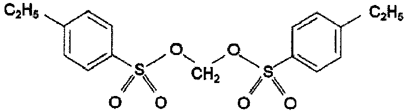 | **215*** | 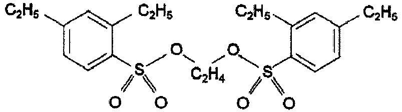 |
| **207** | 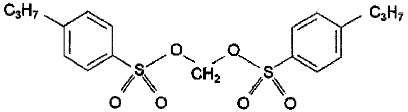 | **216*** | 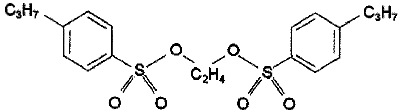 |
| **208** | 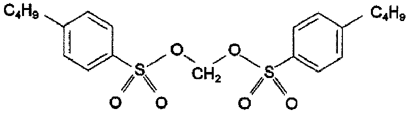 | **217*** | 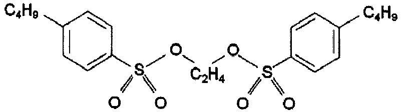 |
| **209** | 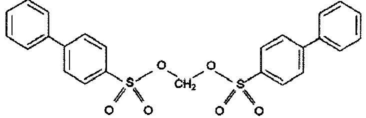 | **218*** | 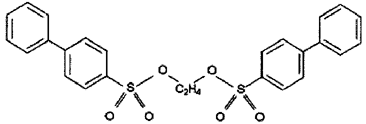 |

| | | | |
|---|---|---|---|
| * Reference Compound | | | |

**[Table 2a]**

| **Compound No.** | **Chemical Structure** | **Compound No.** | **Chemical Structure** |
|---|---|---|---|
| **219** | 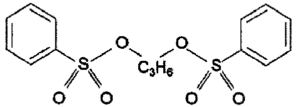 | **228** | 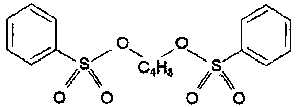 |
| **220*** | 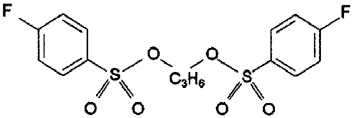 | **229** | 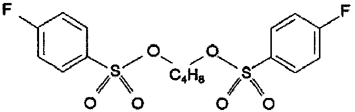 |
| **221*** | 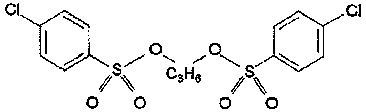 | **230** | 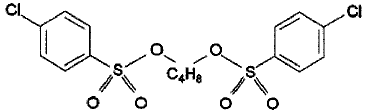 |
| **222*** | 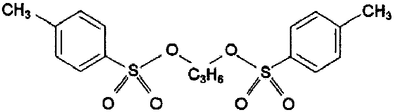 | **231** | 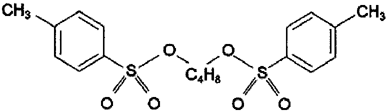 |
| **223*** | 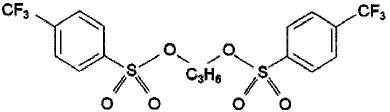 | **232** | 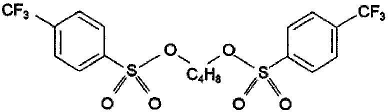 |
| **224*** | 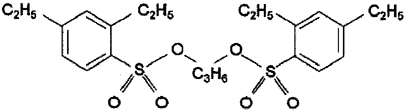 | **233** | 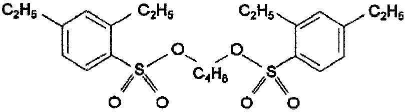 |
| **225*** | 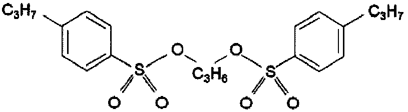 | **234** | 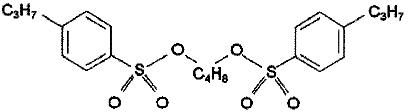 |
| **226*** | 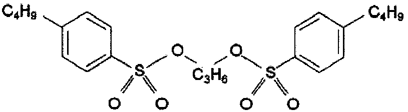 | **235** | 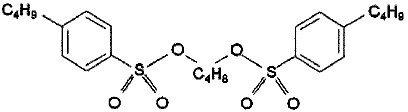 |
| **227*** | 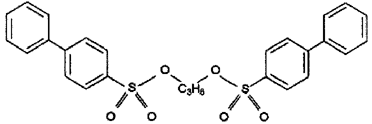 | **236** | 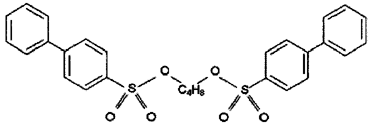 |

| | | | |
|---|---|---|---|
| * Reference Compound | | | |

### [Table 3]

**[Table 3]**

| **Compound No.** | **Chemical Structure** | **Compound No.** | **Chemical Structure** |
|---|---|---|---|
| **237** | 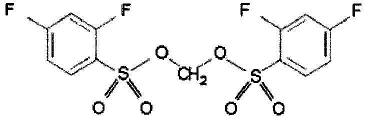 | **241*** | 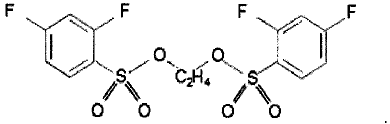 |
| **238** | 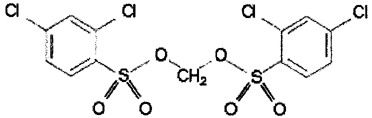 | **242*** | 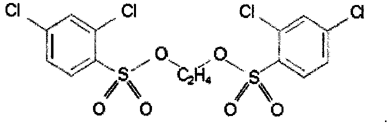 |
| **239** | 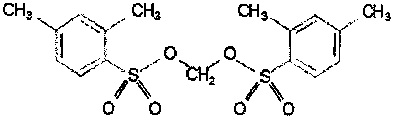 | **243*** | 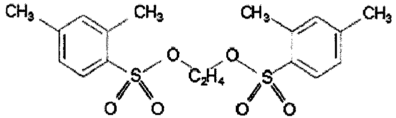 |
| **240** | 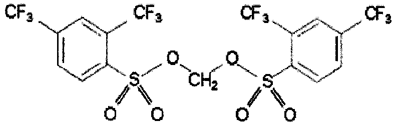 | **244*** | 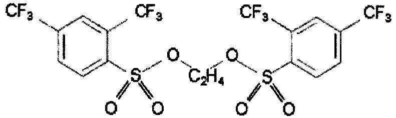 |
| **245*** | 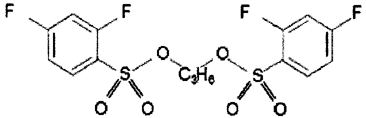 | **249*** | 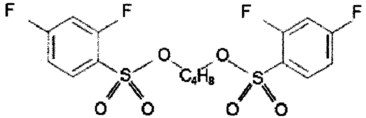 |
| **246*** | 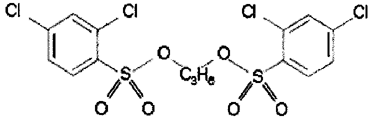 | **250*** | 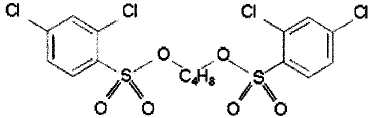 |
| **247*** | 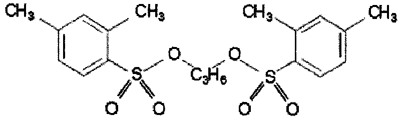 | **251*** | 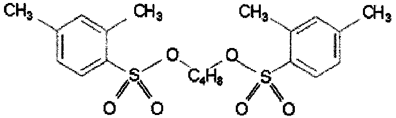 |
| **248*** | 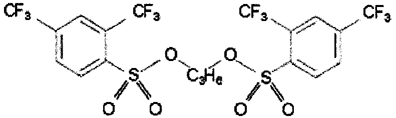 | **252*** | 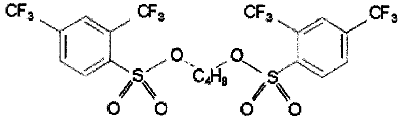 |

| | | | |
|---|---|---|---|
| * Reference Compound | | | |

### [Table 4]

**[Table 4]**

| **Compound No.** | **Chemical Structure** | **Compound No.** | **Chemical Structure** |
|---|---|---|---|
| **253** | 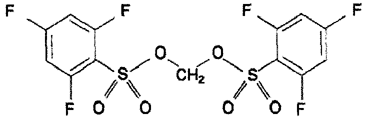 | **257*** | 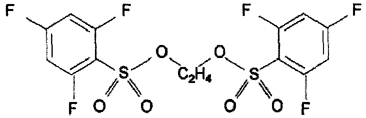 |
| **254** | 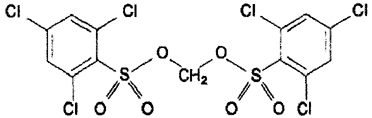 | **258*** | 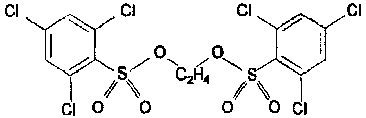 |
| **255** | 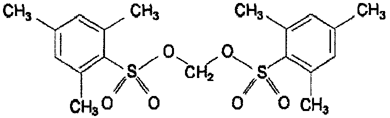 | **259*** | 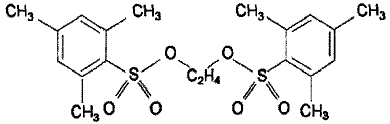 |
| **256** | 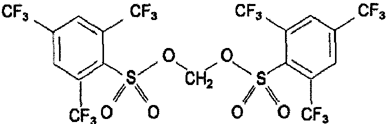 | **260*** | 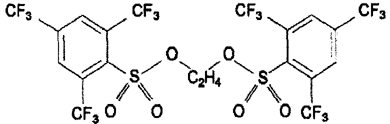 |
| **261*** | 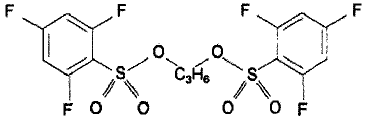 | **265*** | 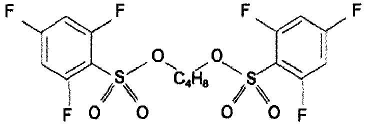 |
| **262*** | 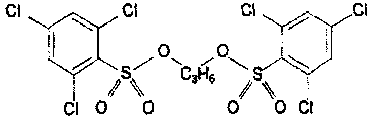 | **266*** | 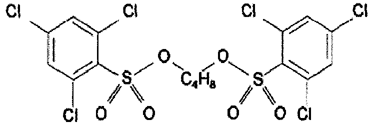 |
| **263*** | 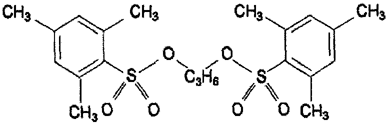 | **267*** | 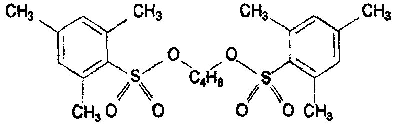 |
| **264*** | 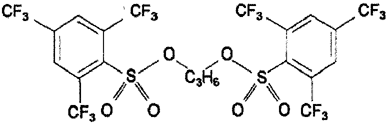 | **268*** | 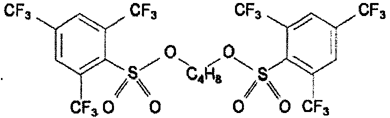 |

| | | | |
|---|---|---|---|
| * Reference Compound | | | |

The compound represented by the above formula (2) can be manufactured, for example, with reference to JP2011-088914A and JP4682248B.

0.05% by mass or more and 1.5% by mass or less, preferably 0.1% by mass or more and 1% by mass or less, of the compound represented by the above formula (2) is included in the electrolytic solution. When the compound represented by the above formula (2) is included in the electrolytic solution in these concentration ranges, a sufficient effect is exerted on coating formation on electrode surfaces by electrochemical reactions, and the generation of gas does not occur, which is preferred in view of safety. The compounds represented by the above formula (2) can be used alone, or a plurality of the compounds represented by the above formula (2) can be used in combination.

In addition, preferably 10% by mass or less, more preferably 0.01% by mass or more and 5% by mass or less, of the compounds represented by the above formulas (1) and (2) based on the entire electrolytic solution are included.

In addition, the electrolytic solution according to this exemplary embodiment preferably contains a disulfonate represented by the following formula (3): 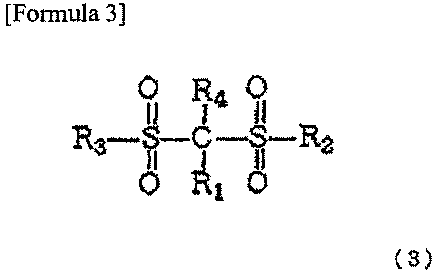 wherein R₁ and R₄ each independently represent one atom or group selected from the group consisting of a hydrogen atom, a substituted or unsubstituted alkyl group having 1 to 5 carbon atoms, a substituted or unsubstituted alkoxy group having 1 to 5 carbon atoms, a substituted or unsubstituted fluoroalkyl group having 1 to 5 carbon atoms, a perfluoroalkyl group having 1 to 5 carbon atoms, -SO₂X₉ (X₉ is a substituted or unsubstituted alkyl group having 1 to 5 carbon atoms), -SY₁ (Y₁ is a substituted or unsubstituted alkyl group having 1 to 5 carbon atoms), -COZ (Z is a hydrogen atom or a substituted or unsubstituted alkyl group having 1 to 5 carbon atoms), and a halogen atom; and R₂ and R₃ each independently represent one atom or group selected from the group consisting of a substituted or unsubstituted alkyl group having 1 to 5 carbon atoms, a substituted or unsubstituted alkoxy group having 1 to 5 carbon atoms, a substituted or unsubstituted phenoxy group, a substituted or unsubstituted fluoroalkyl group having 1 to 5 carbon atoms, a perfluoroalkyl group having 1 to 5 carbon atoms, a substituted or unsubstituted fluoroalkoxy group having 1 to 5 carbon atoms, a perfluoroalkoxy group having 1 to 5 carbon atoms, a hydroxyl group, a halogen atom, -NX₁₀X₁₁ (X₁₀ and X₁₁ are each independently a hydrogen atom or a substituted or unsubstituted alkyl group having 1 to 5 carbon atoms), and - NY₂CONY₃Y₄ (Y₂ to Y₄ are each independently a hydrogen atom or a substituted or unsubstituted alkyl group having 1 to 5 carbon atoms).

R₁ and R₄ in the above formula (3) are each independently preferably an atom or group selected from a hydrogen atom, an alkyl group having 1 to 5 carbon atoms, a halogen atom, and - SO₂X₉ (X₉ is a substituted or unsubstituted alkyl group having 1 to 5 carbon atoms), more preferably a hydrogen atom or an unsubstituted alkyl group having 1 to 5 carbon atoms, and further preferably a hydrogen atom or a methyl group, from the viewpoint of the ease of formation of reactive coatings occurring on electrodes, the stability of the compound, the ease of handling, solubility in the solvent, the ease of synthesis of the compound, price, and the like. As particularly preferred forms of R₁ and R₄, R₁ and R₄ are each a hydrogen atom because when R₁ and R₄ are each a hydrogen atom, the methylene site sandwiched between two sulfonyl groups is activated, and reaction coatings are easily formed on electrodes.

In addition, from the viewpoint of the stability of the compound, the ease of synthesis of the compound, solubility in the solvent, price, and the like, R₂ and R₃ are each independently preferably one atom or group selected from a substituted or unsubstituted alkyl group having 1 to 5 carbon atoms, a substituted or unsubstituted alkoxy group having 1 to 5 carbon atoms, a substituted or unsubstituted phenoxy group, a hydroxyl group, a halogen atom, and -NX₁₀X₁₁ (X₁₀ and X₁₁ are each independently a hydrogen atom or a substituted or unsubstituted alkyl group having 1 to 5 carbon atoms), more preferably a substituted or unsubstituted alkyl group having 1 to 5 carbon atoms or a substituted or unsubstituted alkoxy group having 1 to 5 carbon atoms, and further preferably, either one or both of R₂ and R₃ are a substituted or unsubstituted alkoxy group having 1 to 5 carbon atoms. In addition, for a similar reason, as the above substituted or unsubstituted alkyl group having 1 to 5 carbon atoms, a methyl group or an ethyl group is preferred, and as the above substituted or unsubstituted alkoxy group having 1 to 5 carbon atoms, a methoxy group or an ethoxy group is preferred.

Specific examples of the compound represented by the above formula (3) are listed below, but this exemplary embodiment is not limited to these.

### [Table 5]

**[Table 5]**

| **Compound No.** | **Chemical Structure** | **Compound No.** | **Chemical Structure** | **Compound No.** | **Chemical Structure** |
|---|---|---|---|---|---|
| **101** | 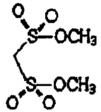 | **109** | 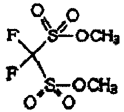 | **117** | 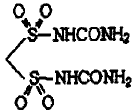 |
| **102** | 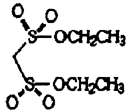 | **110** | 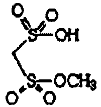 | **118** | 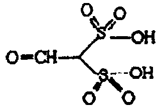 |
| **103** | 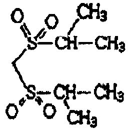 | **111** | 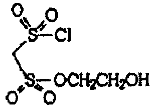 | **119** | 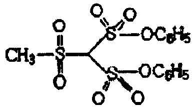 |
| **104** | 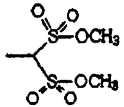 | **112** | 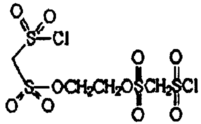 | **120** | 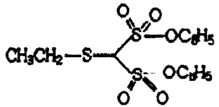 |
| **105** | 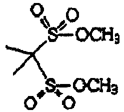 | **113** | 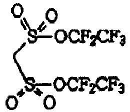 | | |
| **106** | 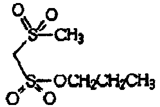 | **114** | 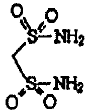 | | |
| **107** | 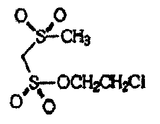 | **115** | 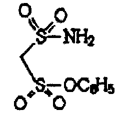 | | |
| **108** | 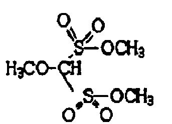 | **116** | 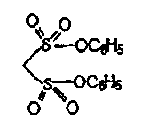 | | |

When the compound represented by the above formula (3) is added to the electrolytic solution, the content of the compound represented by the above formula (3) in the electrolytic solution is not particularly limited, and 0.1% by mass or more and 5.0% by mass or less of the compound represented by the above formula (3) is preferably included in the electrolytic solution. When the compound represented by the above formula (3) is less than 0.1% by mass, a sufficient effect may not be exerted on coating formation on electrode surfaces by electrochemical reactions. When the compound represented by the above formula (3) is more than 5.0% by mass, the viscosity of the electrolytic solution may increase. The ratio of the compound represented by the above formula (3) in the total amount of the compounds represented by the above formula (1), the above formula (2), and the above formula (3) is preferably 10 to 90% by mass based on the total mass of the compounds represented by the above formula (1), the above formula (2), and the above formula (3).

The electrolytic solution according to this exemplary embodiment can be arranged to further contain one or more compounds having a sulfonyl group. For example, the electrolytic solution preferably contains a sultone compound represented by the following formula (4): 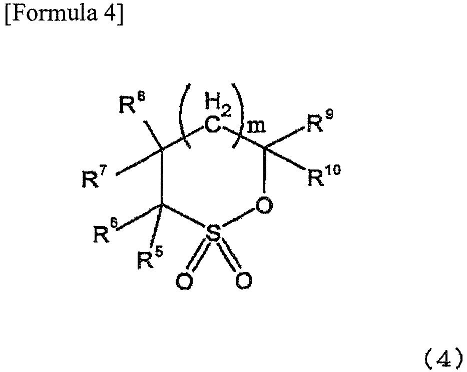 wherein R⁵ to R¹⁰ each independently represent one group selected from the group consisting of a hydrogen atom, an alkyl group having 1 or more and 12 or less carbon atoms, a cycloalkyl group having 3 or more and 6 or less carbon atoms, and an aryl group having 6 or more and 12 or less carbon atoms, and m is 0, 1, or 2.

By further adding the sultone compound represented by the above formula (4) in addition to the compounds represented by the above formula (1) and the above formula (2), the adjustment of the viscosity of the electrolytic solution becomes easy. In addition, by using the compound having a sulfonyl group in combination, the stability of surface films is improved by a synergistic effect. In addition, the suppression of the decomposition of solvent molecules can be suppressed. In addition, the effect of removing moisture in the electrolytic solution increases.

Specific examples of the sultone compound include, but are not limited to, sulfolane, 1,3-propane sultone, 1,4-butane sultone, alkanesulfonic anhydrides, γ-sultone compounds, and sulfolene derivatives.

When the sultone compound is further added to the electrolytic solution in addition to the compounds represented by the above formula (1) and the above formula (2), 0.005% by mass or more and 10% by mass or less of the sultone compound can be added to the electrolytic solution. By adding 0.005% by mass or more of the sultone compound, a surface film can be effectively formed on a negative electrode surface. More preferably, 0.01% by mass or more of the sultone compound can be added. In addition, by adding 10% by mass or less of the sultone compound, the solubility of the sultone compound is maintained, and the viscosity increase of the electrolytic solution can be suppressed. More preferably, 5% by mass or less of the sultone compound can be added.

The electrolytic solution according to this exemplary embodiment is obtained by dissolving or dispersing the compounds represented by the above formula (1) and the above formula (2), and a sultone compound, a lithium salt, other additives, and the like as required, in an aprotic solvent. By mixing additives having different properties, surface films having different properties can be formed on a negative electrode surface, and therefore, battery characteristics are improved.

In addition, when the electrolytic solution further contains vinylene carbonate (VC) or a derivative thereof, an improvement in the cycle characteristics and resistance increase suppression effect of a secondary battery can be promoted. The amount of the VC or a derivative thereof added is preferably 0.01% by mass or more and 10% by mass or less based on the entire electrolytic solution. When the amount is 0.01% by mass or more, cycle characteristics can be improved, and further, resistance increase during storage at high temperature can also be suppressed. In addition, when the amount is 10% by mass or less, the resistance value of the electrolytic solution can be decreased.

### (Electrolyte)

The electrolytic solution according to this exemplary embodiment can contain an electrolyte. For the electrolyte, a lithium salt is used in the case of a lithium secondary battery, and this is dissolved in an aprotic solvent. Examples of the lithium salt include lithium imide salts, LiPF₆, LiAsF₆, LiAlCl₄, LiClO₄, LiBF₄, and LiSbF₆. Among these, particularly LiPF₆ and LiBF₄ are preferred. Examples of the lithium imide salts include LiN(CₖF₂ₖ₊₁SO₂)₂ and LiN(CₙF₂ₙ₊₁SO₂)(CₘF₂ₘ₊₁SO₂) (k, n, and m are natural numbers). These can be used alone, or a plurality of these can be used in combination. By containing these lithium salts, high energy density can be achieved.

### [Secondary Battery]

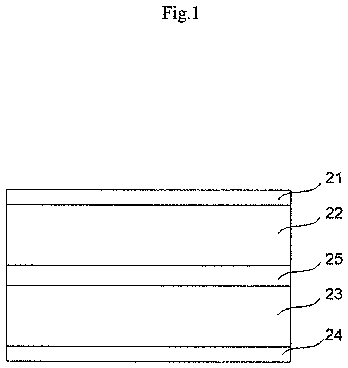

A secondary battery according to this exemplary embodiment includes at least a positive electrode, a negative electrode, and the electrolytic solution for a secondary battery according to this exemplary embodiment. A schematic structure is shown in Figure 1 for one example of the secondary battery according to this exemplary embodiment. The secondary battery is composed of a positive electrode current collector 21, a layer containing a positive electrode active material capable of intercalating and deintercalating lithium ions 22, a layer containing a negative electrode active material intercalating and deintercalating lithium ions 23, a negative electrode current collector 24, and a separator containing an electrolytic solution 25. Here, the electrolytic solution contains the cyclic disulfonic acid compound (cyclic disulfonate) represented by the above formula (1) and the compound represented by the above formula (2). In addition, the secondary battery according to this exemplary embodiment is preferably covered with a laminate package.

### (Current Collectors)

As the positive electrode current collector 21, aluminum, stainless steel, nickel, titanium, or alloys thereof, and the like can be used. As the negative electrode current collector 24, copper, stainless steel, nickel, titanium, or alloys thereof can be used.

### (Separator)

As the separator 25, porous films of polyolefins, such as polypropylene and polyethylene, fluororesins, and the like are preferably used.

### (Positive Electrode)

As the positive electrode active material, lithium-containing complex oxides capable of intercalating and deintercalating lithium are preferably used. Specifically, LiMO₂ (M includes at least one selected from Mn, Fe, Co, and Ni, and further, part of M may be replaced by other cations, such as Mg, Al, and Ti), Li₁₊ₓMn_{2-x-y}M_{y}O_{4-z} (0 ≤ x ≤ 0.2, 0 ≤ y < 2, x + y ≤ 2, -0.1 ≤ z ≤ 0.1, and M = at least one or more selected from Ni, Mg, Al, Ti, Co, Fe, Cr, and Cu), and the like are preferred. Examples of the lithium-containing complex oxides include lithium manganese complex oxides having a spinel structure, olivine type lithium-containing complex oxides, and inverse spinel type lithium-containing complex oxides. These positive electrode active materials have high operating voltage, and therefore, the decomposition of the electrolytic solution occurs easily. Particularly, when a lithium manganese complex oxide having a spinel structure, such as LiMn₂O₄, is used as the positive electrode active material, further, the dissolution of manganese in the electrolytic solution due to an increase in the hydrogen ion concentration of the electrolytic solution and the like occurs, and as a result, the discharge capacity and the cycle characteristics decrease.

The layer containing a positive electrode active material 22 can be obtained by a method such as using the above positive electrode active material, dispersing and kneading the above positive electrode active material together with a conductive substance, such as carbon black, and a binding agent, such as polyvinylidene fluoride (PVDF), in a solvent, such as N-methyl-2-pyrrolidone (NMP), and coating a substrate, such as aluminum foil, with the dispersion.

### (Negative Electrode)

As the negative electrode active material, carbon is preferably used. As the carbon, graphite, amorphous carbon, diamond-like carbon, carbon nanotubes, and the like, which intercalate lithium, can be used. Among these, graphite or amorphous carbon is preferred. Particularly, graphite materials are preferred from the viewpoint that they have high electronic conductivity, have excellent adhesiveness to a current collector containing a metal, such as copper, and excellent voltage flatness, contain a small amount of impurities because they are formed at high treatment temperature, and are advantageous in improving negative electrode performance. In addition, an oxide can also be used as the negative electrode active material. As the oxide, any of silicon oxide, tin oxide, indium oxide, zinc oxide, lithium oxide, phosphoric acid, and boric acid, or a complex thereof can be used, and particularly, silicon oxide is preferably used. As the structure of the oxide, the oxide is preferably in an amorphous state. This is because silicon oxide is stable and does not cause reactions with other compounds, and because an amorphous structure does not lead to deterioration due to nonuniformity, such as grain boundaries and defects. As the film formation method, methods such as a vapor deposition method, a CVD method, and a sputtering method can be used.

### Examples

This exemplary embodiment will be described in detail below by Examples with reference to the drawings, but this exemplary embodiment is not limited to these Examples.

### (Example 1)

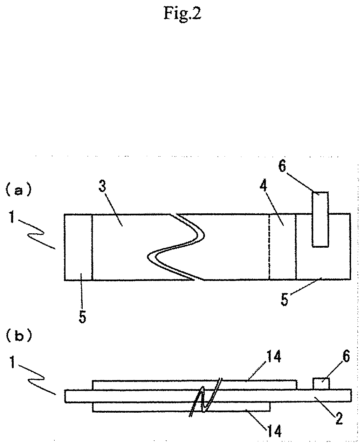

The making of a positive electrode will be described by Figure 2. Figure 2(a) shows a top view of a positive electrode, and Figure 2(b) shows a side view of the positive electrode. 85% by mass of LiMn₂O₄, 7% by mass of acetylene black as a conductive auxiliary material, and 8% by mass of polyvinylidene fluoride as a binder were mixed, N-methylpyrrolidone was added, and the mixture was further mixed to make a positive electrode slurry. Both surfaces of a 20 µm thick Al foil 2, which was a current collector, were coated with the positive electrode slurry by a doctor blade method so that the thickness after roll pressing treatment was 180 µm. Then, the Al foil coated with the positive electrode slurry was dried at 120°C for 5 minutes and subjected to a pressing step to form a positive electrode active material both surface-coated portion 3. A positive electrode active material-uncoated portion 5 in which neither surface was coated with the positive electrode active material, and a positive electrode active material one surface-coated portion 4 in which only one surface was coated with the positive electrode active material were provided at one end of a positive electrode 1, and a positive electrode conductive tab 6 was provided in the positive electrode active material-uncoated portion 5. In addition, a positive electrode active material-uncoated portion 5 was provided at the other end of the positive electrode 1.

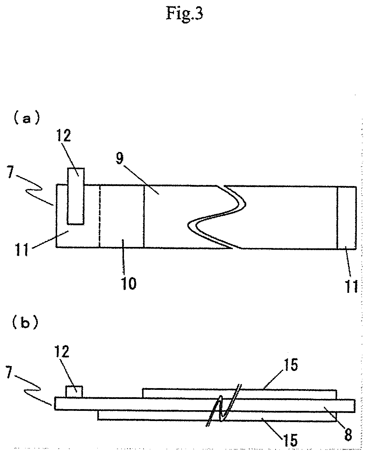

The making of a negative electrode will be described by Figure 3. Figure 3(a) shows a top view of a negative electrode, and Figure 3(b) shows a side view of the negative electrode. 90% by mass of graphite, 1% by mass of acetylene black as a conductive auxiliary agent, and 9% by mass of polyvinylidene fluoride as a binder were mixed, N-methylpyrrolidone was added, and the mixture was further mixed to make a negative electrode slurry. Both surfaces of a 10 µm thick Cu foil 8, which was a current collector, were coated with the negative electrode slurry so that the thickness after roll pressing treatment was 120 µm. Then, the Cu foil coated with the negative electrode slurry was dried at 120°C for 5 minutes and subjected to a pressing step to form a negative electrode active material both surface-coated portion 9. A negative electrode active material one surface-coated portion 10 in which only one surface was coated with the negative electrode active material, and a negative electrode active material-uncoated portion 11 not coated with the negative electrode active material were provided at one end of a negative electrode 7, and a negative electrode conductive tab 12 was attached to the negative electrode active material-uncoated portion 11. In addition, a negative electrode active material-uncoated portion 11 was provided at the other end of the negative electrode 7.

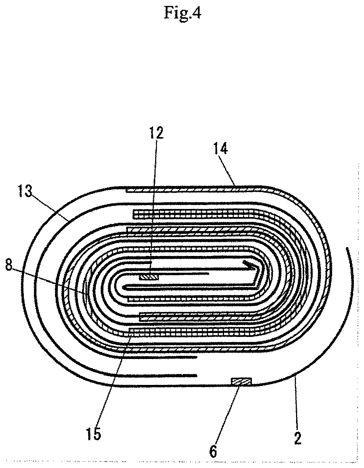

The making of a battery element will be described by Figure 4. A portion in which two separators 13 which is a polypropylene microporous film subjected to hydrophilic treatment having a film thickness of 25 µm and a porosity of 55% were welded and cut was fixed to the winding core of a winding apparatus and wound, and the tips of the positive electrode 1 (Figure 2) and the negative electrode 7 (Figure 3) were introduced. The negative electrode 7 was disposed between the two separators 13 and the positive electrode 1 was disposed on the upper surface of the separator 13 so that the side opposite to the connection portion of the positive electrode conductive tab 6 of the positive electrode 1, and the negative electrode conductive tab 12 connection portion side of the negative electrode 7 were each the tip side, and the winding core was rotated for winding to form a battery element (hereinafter described as a jelly roll (J/R)).

The above J/R was housed in an embossed laminate package, the positive electrode conductive tab 6 and the negative electrode conductive tab 12 were pulled out, one side of the laminate package was folded back, and heat sealing was performed leaving an injection portion. An electrolytic solution was injected from the injection portion into the laminate package, and the injection portion was heat-sealed to make a secondary battery.

The electrolytic solution was prepared by dissolving 1.0 mol/l of LiPF₆ as an electrolyte in an aprotic solvent of ethylene carbonate (EC)/diethyl carbonate (DEC) = 30/70 (volume ratio) and further adding compound No. 1 described in Table 1 and compound No. 201 described in Table 2 so that 1.60% by mass of compound No. 1 and 0.50% by mass of compound No. 201 were included in the electrolytic solution.

The obtained secondary battery was charged to a battery voltage of 3.2 V (charge current: 0.2 C, CC charge) as a first charge step, opened once, then vacuum-sealed again, and charged to a battery voltage of 4.2 V (charge current: 0.2 C, CC-CV charge, charge time: 6.5 hours) as a second charge step. Then, the secondary battery was CC-discharged at 0.2 C to a battery voltage of 3.0 V, and discharge capacity at this time was taken as initial capacity.

As the cycle test of the above secondary battery, CC-CV charge (upper limit voltage 4.2 V, current 1 C, CV time 1.5 hours) and CC discharge (lower limit voltage 3.0 V, current 1 C) were both carried out at 45°C and 60°C. The proportion of discharge capacity in the 300th cycle to discharge capacity in the 1st cycle was taken as a capacity retention rate. The results are shown in Table 6.

The battery volume change rate of the above secondary battery after cycles was obtained as the ratio of battery volume after 300 cycles to battery volume after initial charge taken as 1. The result is shown in Table 6.

The impedance of the above secondary battery after initial charge and after 300 cycles was measured using a frequency response analyzer and a potentio/galvanostat, and charge transfer resistance was calculated. The resistance increase rate is a value obtained by dividing charge transfer resistance after 300 cycles by initial charge transfer resistance. The result is shown in Table 6.

### (Example 2)

A secondary battery was made as in Example 1 except that in Example 1, the amount of compound No. 201 was 0.20% by mass. The results are shown in Table 6.

### (Example 3) outside the scope of the claimed invention

A secondary battery was made as in Example 1 except that in Example 1, the amount of compound No. 201 was 1.00% by mass. The results are shown in Table 6.

### (Example 4)

In Example 1, 1,3-propane sultone was further added so that 1.00% by mass of 1,3-propane sultone was included. Except this, a secondary battery was made as in Example 1. The results are shown in Table 6.

### (Example 5)

In Example 1, vinylene carbonate was further added so that 1.00% by mass of vinylene carbonate was included. Except this, a secondary battery was made as in Example 1. The results are shown in Table 6.

### (Example 6)

In Example 1, 1,3-propane sultone and vinylene carbonate were further added so that 1.00% by mass of 1,3-propane sultone and 1.00% by mass of vinylene carbonate were included. Except this, a secondary battery was made as in Example 1. The results are shown in Table 6.

### (Example 7)

A secondary battery was made as in Example 1 except that in Example 1, the amount of compound No. 1 was 0.80%, and compound No. 101 was further added so that 0.80% compound No. 101 was included. The results are shown in Table 6.

### (Comparative Example 1)

A secondary battery was made as in Example 1 except that in Example 1, compound No. 1 was not added. The results are shown in Table 6.

### (Comparative Example 2)

A secondary battery was made as in Example 1 except that in Example 4, compound No. 1 was not added. The results are shown in Table 6.

### (Comparative Example 3)

A secondary battery was made as in Example 1 except that in Example 5, compound No. 1 was not added. The results are shown in Table 6.

### (Comparative Example 4)

A secondary battery was made as in Example 1 except that in Example 6, compound No. 1 was not added. The results are shown in Table 6.

### (Comparative Example 5)

A secondary battery was made as in Example 1 except that in Example 7, compound No. 201 was not added. The results are shown in Table 6.

### (Comparative Example 6)

A secondary battery was made as in Example 1 except that no additives were added. The results are shown in Table 6.

### (Comparative Example 7)

A secondary battery was made as in Example 1 except that only compound No. 1 was added so that 0.80% by mass of compound No. 1 was included. The results are shown in Table 6.

### (Comparative Example 8)

A secondary battery was made as in Example 1 except that only compound No. 1 was added so that 1.60% by mass of compound No. 1 was included. The results are shown in Table 6.

### (Comparative Example 9)

A secondary battery was made as in Example 1 except that only compound No. 1 was added so that 2.10% by mass of compound No. 1 was included. The results are shown in Table 6.

### [Table 6]

**[Table 6]**

| | Compound NO.1 | Compound No.201 | Compound No.101 | 1,3-Propane sultone | Vinylene carbonate | Capacity retention rate (45°C) | Capacity retention rate (60°C) | Volume increase rate (60°C) | Resistance increase rate (60°C) |
|---|---|---|---|---|---|---|---|---|---|
| Example 1 | 1.60% | 0.50% | No | No | No | 80% | 74% | 6% | 45% |
| Example 2 | 1.60% | 0.20% | No | No | No | 81% | 71% | 7% | 51% |
| Example 3 | 1.60% | 1.00% | No | No | No | 80% | 67% | 9% | 75% |
| Example 4 | 1.60% | 0.50% | No | 1.00% | No | 81% | 76% | 5% | 35% |
| Example 5 | 1.60% | 0.50% | No | No | 1.00% | 81% | 75% | 6% | 36% |
| Example 6 | 1.60% | 0.50% | No | 1.00% | 1.00% | 81% | 77% | 5% | 25% |
| Example 7 | 0.80% | 0.50% | 0.80% | No | No | 80% | 74% | 6% | 42% |
| Comparative Example 1 | No | 0.50% | No | No | No | 72% | 63% | 7% | 193% |
| Comparative Example 2 | No | 0.50% | No | 1.00% | No | 72% | 65% | 7% | 91% |
| Comparative Example 3 | No | 0.50% | No | No | 1.00% | 72% | 64% | 8% | 112% |
| Comparative Example 4 | No | 0.50% | No | 1.00% | 1.00% | 73% | 66% | 8% | 75% |
| Comparative Example 5 | 0.80% | No | 0.80% | No | No | 80% | 68% | 7% | 60% |
| Comparative Example 6 | No | No | No | No | No | 70% | 50% | 12% | 573% |
| Comparative Example 7 | 0.80% | No | No | No | No | 78% | 65% | 11% | 127% |
| Comparative Example 8 | 1.60% | No | No | No | No | 80% | 67% | 7% | 66% |
| Comparative Example 9 | 2.10% | No | No | No | No | 80% | 67% | 8% | 43% |

When the capacity retention rate in the 45°C cycles in Example 1 was compared with those in Comparative Examples 6 to 9, no significant difference was seen, whereas in the 60°C cycles, a substantial improvement in cycle characteristics was confirmed in Example 1.

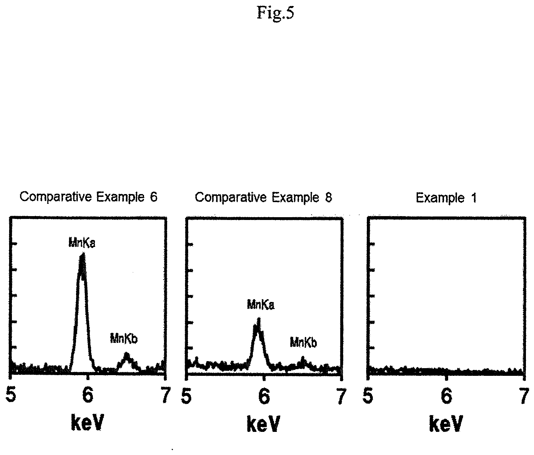

As shown in Figure 5, for the batteries shown in Example 1, Comparative Example 6, and Comparative Example 8, the negative electrode surface after 300 cycles at 60°C was examined using energy-dispersive X-ray analysis (EDX). As a result, in Comparative Example 6 in which no additives were added and Comparative Example 8 in which only compound No. 1 was added, peaks indicating Mn were seen, whereas in Example 1 in which both compound No. 1 and compound No. 201 were added, the intensities of peaks indicating Mn were less than the detection limit, and the peaks could not be confirmed. From this, it can be said that in Comparative Example 8, the amount of Mn dissolution occurring in the positive electrode was larger than in Example 1, and in Example 1, a large Mn dissolution suppression effect was shown. In addition, when Comparative Example 6 and Comparative Example 8 are compared, the peaks indicating Mn in Comparative Example 6 are strong, and it can be said that the additive of Comparative Example 8 also showed some Mn dissolution suppression effect.

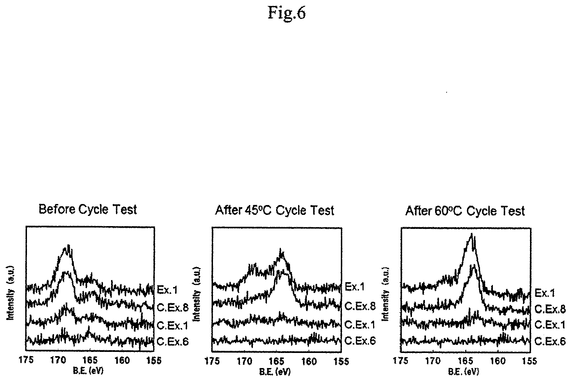

For the secondary batteries shown in Example 1, Comparative Example 1, Comparative Example 6, and Comparative Example 8, the positive electrode surface and the negative electrode surface before and after cycles were analyzed using X-ray photoelectron spectroscopy (XPS). As a result of peak splitting in the sulfur spectrum, it was confirmed that in the positive electrode before the cycle tests, a substance having peaks around 164 eV and around 169 eV was present except Comparative Example 6 (Figure 6).

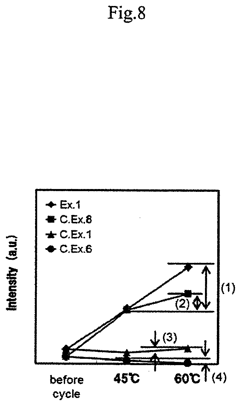

For the positive electrode surface after the 45°C cycle test, the X-ray spectrum was compared with the X-ray spectrum before the cycle test. When attention was paid to Example 1 in which both compound No. 1 and compound No. 201 were added, the peak intensity around 169 eV decreased, whereas the peak intensity around 164 eV increased. In addition, also for Comparative Example 8 in which only compound No. 1 was added, a similar phenomenon occurred, and the peak intensity around 164 eV was at the same level as Example 1. On the other hand, when, for the positive electrode surface after the 60°C cycle test, the spectrum was compared with the spectrum before the cycle test, a stronger peak around 164 eV appeared in Example 1 than in Comparative Example 8. On the other hand, when attention was paid to Comparative Example 1 in which only compound No. 201 was added, a peak was seen around 164 eV, but the intensity was weaker than that in Example 1 and Comparative Example 8. In addition, the difference in peak intensity around 164 eV between the 45°C cycles and the 60°C cycles was largest in Example 1 (Figure 8 (1)) followed by Comparative Example 8 (Figure 8 (2)), Comparative Example 1 (Figure 8 (3)), and Comparative Example 6 (Figure 8 (4)) in this order. The difference in Comparative Example 6 (Figure 8 (4)) was not taken as a significant difference because of no additives, and the difference in peak intensity between the 45°C cycles and the 60°C cycles in Comparative Example 1 (Figure 8 (3), that is, the influence of including compound 201 alone in the electrolytic solution) was smaller than a value obtained by subtracting the difference in peak intensity in Comparative Example 8 (Figure 8 (2)) from the difference in peak intensity in Example 1 (Figure 8 (1)) (Figure 8 (1) - (2)). From this, it is considered that each of compound No. 1 and compound No. 201 added together in Example 1 did not affect peak intensity alone, but compounds No. 1 and No. 201 had a synergistic effect, thereby further increasing the peak intensity around 164 eV, and its difference widened. This difference in peak intensity shows the proportion of the bonded state and is considered to indicate the coating formed on the positive electrode here.

In Example 1 and Comparative Example 8, there was no difference in capacity retention rate in the 45°C cycles, and a difference occurred in the 60°C cycles, and the tendency of the peak behavior around 164 eV matches, and therefore, it is presumed that the proportion of the bonded state increased, that is, a better quality coating was formed, and thus, the cycle characteristics were improved. In addition, when Comparative Example 1 and Comparative Example 6 were compared, the cycle characteristics were better in Comparative Example 1 both in the 45°C and 60°C cycles, particularly in the 60°C cycles. Peaks around 164 eV in the 45°C cycles and the 60°C cycles cannot be confirmed in Comparative Example 6 but are confirmed in Comparative Example 1, and further, the peak intensity is larger at 60°C than at 45°C. From this, it can be said that there is a correlation between a difference in cycle characteristics and peak intensity as in the above.

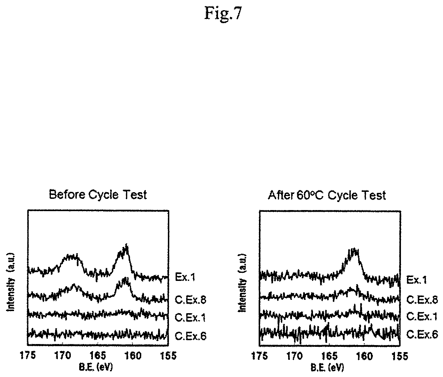

In addition, when attention was paid to the sulfur component in the X-ray spectrum of the negative electrode surface before and after the 60°C cycle test, before the cycle test, peaks due to the sulfur component were not confirmed in Comparative Example 6 and Comparative Example 1, but it was confirmed that a substance having peaks around 162 eV and around 169 eV was present in Example 1 and Comparative Example 8 (Figure 7). After the 60°C cycle test, the peak around 169 eV of these peaks disappeared, and only the peak around 162 eV remained

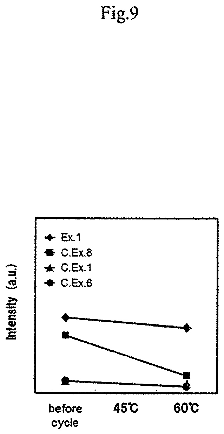

(Figure 7 and Figure 9). Further, the peak around 162 eV in Comparative Example 8 in which only compound No. 1 was added attenuated largely after the 60°C cycle test, whereas the peak around 162 eV attenuated only slightly in Example 1 in which both compound No. 1 and compound No. 201 were added. This difference in peak intensity shows the proportion of the bonded state and is considered to indicate the state of the coating formed on the negative electrode here. It is presumed that the 60°C cycle characteristics were better in Example 1 than in Comparative Example 8 because by adding both compound No. 1 and compound No. 201, the proportion of the bonded state increased more substantially, that is, a better quality coating was formed, than when each was added alone.

From the above, it is considered that in Example 1 in which both compound No. 1 and compound No. 201 were added, both the positive electrode coating and the negative electrode coating had better quality, and particularly, Example 1 had the effect of cycle characteristics improvement at 60°C, high temperature.

### (Examples 8 to 47 and Comparative Examples 10 to 16)

A secondary battery was made as in Example 1 using compounds shown in Table 7 as additives included in the electrolytic solution, and cycle evaluation at 60°C was performed. The result is shown in Table 7.

### [Table 7]

**[Table 7]**

| | Compound NO.1 | Compound No.202 | Capacity retention rate (60°C) |
|---|---|---|---|
| Example 8 | 1.60% | 0.20% | 70% |
| Example 9 | 1.60% | 0.50% | 71% |
| Example 10 | 1.60% | 1.00% | 64% |
| Comparative Example 10 | No | 0.50% | 61% |

| | Compound NO.1 | Compound No.203 | Capacity retention rate (60°C) |
|---|---|---|---|
| Example 11 | 1.60% | 0.50% | 73% |

| | Compound NO.1 | Compound No.204 | Capacity retention rate (60°C) |
|---|---|---|---|
| Example 12 | 1.60% | 0.20% | 69% |
| Example 13 | 1.60% | 0.50% | 72% |
| Example 14 | 1.60% | 1.00% | 68% |
| Comparative Example 11 | No | 0.50% | 60% |

| | Compound NO.1 | Compound No.205 | Capacity retention rate (60°C) |
|---|---|---|---|
| Example 15 | 1.60% | 0.50% | 69% |

| | Compound NO.1 | Compound No.206 | Capacity retention rate (60°C) |
|---|---|---|---|
| Example 16 | 1.60% | 0.50% | 73% |

| | Compound NO.1 | Compound No.207 | Capacity retention rate (60°C) |
|---|---|---|---|
| Example 17 | 1.60% | 0.50% | 74% |

| | Compound NO.1 | Compound No.208 | Capacity retention rate (60°C) |
|---|---|---|---|
| Example 18 | 1.60% | 0.50% | 73% |

| | Compound NO.1 | Compound No.209 | Capacity retention rate (60°C) |
|---|---|---|---|
| Example 19 | 1.60% | 0.50% | 70% |

| | Compound NO.1 | Compound No.237 | Capacity retention rate (60°C) |
|---|---|---|---|
| Example 20 | 1.60% | 0.50% | 71% |

| | Compound NO.1 | Compound No.238 | Capacity retention rate (60°C) |
|---|---|---|---|
| Example 21 | 1.60% | 0.50% | 72% |

| | Compound NO.1 | Compound No.239 | Capacity retention rate (60°C) |
|---|---|---|---|
| Example 22 | 1.60% | 0.50% | 70% |

| | Compound NO.1 | Compound No.240 | Capacity retention rate (60°C) |
|---|---|---|---|
| Example 23 | 1.60% | 0.50% | 71% |

| | Compound NO.1 | Compound No.253 | Capacity retention rate (60°C) |
|---|---|---|---|
| Example 24 | 1.60% | 0.50% | 71% |

| | Compound NO.1 | Compound No.254 | Capacity retention rate (60°C) |
|---|---|---|---|
| Example 25 | 1.60% | 0.50% | 71% |

| | Compound NO.1 | Compound No.255 | Capacity retention rate (60°C) |
|---|---|---|---|
| Example 26 | 1.60% | 0.50% | 73% |

| | Compound NO.1 | Compound No.256 | Capacity retention rate (60°C) |
|---|---|---|---|
| Example 27 | 1.60% | 0.50% | 69% |

| | Compound NO.1 | Compound No.210 | Capacity retention rate (60°C) |
|---|---|---|---|
| Example 28 | 1.60% | 0.20% | 72% |
| Example 29 | 1.60% | 0.50% | 72% |
| Example 30 | 1.60% | 1.00% | 66% |
| Comparative Example 12 | No | 0.50% | 62% |

| | Compound NO.1 | Compound No.219 | Capacity retention rate (60°C) |
|---|---|---|---|
| Example 31 | 1.60% | 0.20% | 70% |
| Example 32 | 1.60% | 0.50% | 73% |
| Example 33 | 1.60% | 1.00% | 67% |
| Comparative Example 13 | No | 0.50% | 61% |

| | Compound NO.1 | Compound No.228 | Capacity retention rate (60°C) |
|---|---|---|---|
| Example 34 | 1.60% | 0.20% | 72% |
| Example 35 | 1.60% | 0.50% | 74% |
| Example 36 | 1.60% | 1.00% | 65% |
| Comparative Example 14 | No | 0.50% | 64% |

| | Compound NO.1 | Compound No.229 | Capacity retention rate (60°C) |
|---|---|---|---|
| Example 37 | 1.60% | 0.50% | 71% |
| Example 38 | 1.60% | 1.00% | 63% |
| Comparative Example 15 | No | 0.50% | 61% |

| | Compound NO.1 | Compound No.230 | Capacity retention rate (60°C) |
|---|---|---|---|
| Example 39 | 1.60% | 0.50% | 73% |

| | Compound NO.1 | Compound No.231 | Capacity retention rate (60°C) |
|---|---|---|---|
| Example 40 | 1.60% | 0.20% | 71% |
| Example 41 | 1.60% | 0.50% | 72% |
| Example 42 | 1.60% | 1.00% | 67% |
| Comparative Example 16 | No | 0.50% | 62% |

| | Compound NO.1 | Compound No.232 | Capacity retention rate (60°C) |
|---|---|---|---|
| Example 43 | 1.60% | 0.50% | 72% |

| | Compound NO.1 | Compound No.233 | Capacity retention rate (60°C) |
|---|---|---|---|
| Example 44 | 1.60% | 0.50% | 74% |

| | Compound NO.1 | Compound No.234 | Capacity retention rate (60°C) |
|---|---|---|---|
| Example 45 | 1.60% | 0.50% | 73% |

| | Compound NO.1 | Compound No.235 | Capacity retention rate (60°C) |
|---|---|---|---|
| Example 46 | 1.60% | 0.50% | 74% |

| | Compound NO.1 | Compound No.236 | Capacity retention rate (60°C) |
|---|---|---|---|
| Example 47 | 1.60% | 0.50% | 72% |

### (Examples 48 to 57)

A secondary battery was made as in Example 1 using compounds shown in Table 8 as additives included in the electrolytic solution, and cycle evaluation at 60°C was performed. The result is shown in Table 8.

### [Table 8]

**[Table 8]**

| | Compound No. | Content | Compound No. | Content | Capacity retention rate (60°C) |
|---|---|---|---|---|---|
| Example 48 | Compound NO.2 | 1.60% | Compound No.201 | 0.50% | 73% |
| Example 49 | Compound NO.4 | 1.60% | Compound No.201 | 0.50% | 73% |
| Example 50 | Compound NO.5 | 1.60% | Compound No.201 | 0.50% | 72% |
| Example 51 | Compound NO.6 | 1.60% | Compound No.201 | 0.50% | 74% |
| Example 52 | Compound NO.7 | 1.60% | Compound No.201 | 0.50% | 71% |
| Example 53 | Compound NO.9 | 1.60% | Compound No.201 | 0.50% | 73% |
| Example 54 | Compound NO.12 | 1.60% | Compound No.201 | 0.50% | 72% |
| Example 55 | Compound NO.15 | 1.60% | Compound No.201 | 0.50% | 72% |
| Example 56 | Compound NO.21 | 1.60% | Compound No.201 | 0.50% | 73% |
| Example 57 | Compound NO.22 | 1.60% | Compound No.201 | 0.50% | 71% |

### (Comparative Examples 17 to 36)

A secondary battery was made as in Example 1 using compound No. 1 and a compound shown in Table 9 as additives included in the electrolytic solution, and cycle evaluation at 60°C was performed. The result is shown in Table 10.

### [Table 9]

**[Table 9]**

| **Compound No.** | **Chemical Structure** | **Compound No.** | **Chemical Structure** |
|---|---|---|---|
| **269** | 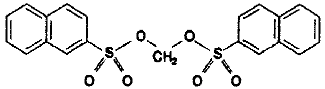 | **279** | 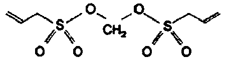 |
| **270** | 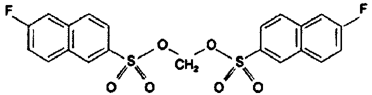 | **280** | 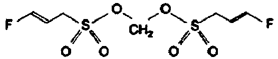 |
| **271** | 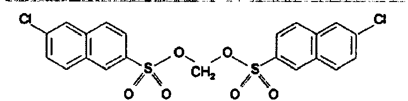 | **281** | 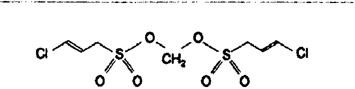 |
| **272** | 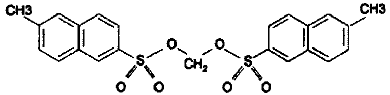 | **282** | 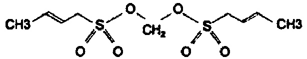 |
| **273** | 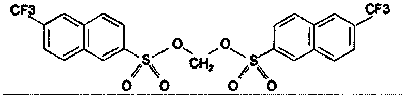 | **283** | 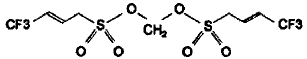 |
| **274** | 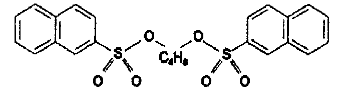 | **284** | 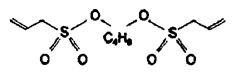 |
| **275** | 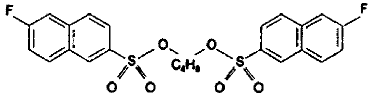 | **285** | 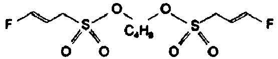 |
| **276** | 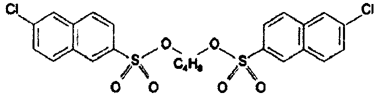 | **286** | 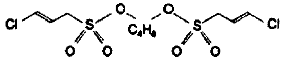 |
| **277** | 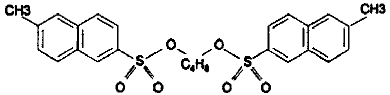 | **287** | 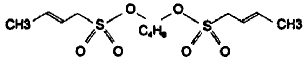 |
| **278** | 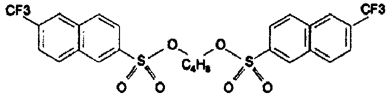 | **288** | 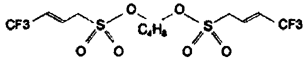 |

### [Table 10]

**[Table 10]**

| | Compound No. | Content | Compound No. | Content | Capacity retention rate (60°C) |
|---|---|---|---|---|---|
| Comparative Example 17 | Compound NO.1 | 1.60% | Compound NO.269 | 0.50% | 66% |
| Comparative Example 18 | Compound NO.1 | 1.60% | Compound NO.270 | 0.50% | 65% |
| Comparative Example 19 | Compound NO.1 | 1.60% | Compound NO.271 | 0.50% | 67% |
| Comparative Example 20 | Compound NO.1 | 1.60% | Compound NO.272 | 0.50% | 66% |
| Comparative Example 21 | Compound NO.1 | 1.60% | Compound NO.273 | 0.50% | 65% |
| Comparative Example 22 | Compound NO.1 | 1.60% | Compound NO.274 | 0.50% | 66% |
| Comparative Example 23 | Compound NO.1 | 1.60% | Compound NO.275 | 0.50% | 67% |
| Comparative Example 24 | Compound NO.1 | 1.60% | Compound NO.276 | 0.50% | 65% |
| Comparative Example 25 | Compound NO.1 | 1.60% | Compound NO.277 | 0.50% | 66% |
| Comparative Example 26 | Compound NO.1 | 1.60% | Compound NO.278 | 0.50% | 67% |
| Comparative Example 27 | Compound NO.1 | 1.60% | Compound NO.279 | 0.50% | 68% |
| Comparative Example 28 | Compound NO.1 | 1.60% | Compound NO.280 | 0.50% | 69% |
| Comparative Example 29 | Compound NO.1 | 1.60% | Compound NO.281 | 0.50% | 68% |
| Comparative Example 30 | Compound NO.1 | 1.60% | Compound NO.282 | 0.50% | 67% |
| Comparative Example 31 | Compound NO.1 | 1.60% | Compound NO.283 | 0.50% | 69% |
| Comparative Example 32 | Compound NO.1 | 1.60% | Compound NO.284 | 0.50% | 68% |
| Comparative Example 33 | Compound NO.1 | 1.60% | Compound NO.285 | 0.50% | 69% |
| Comparative Example 34 | Compound NO.1 | 1.60% | Compound NO.286 | 0.50% | 67% |
| Comparative Example 35 | Compound NO.1 | 1.60% | Compound NO.287 | 0.50% | 69% |
| Comparative Example 36 | Compound NO.1 | 1.60% | Compound NO.288 | 0.50% | 68% |

This application claims priority based on Japanese Patent Application No. 2012-55907 filed March 13, 2012.

The invention of this application has been described above with reference to the exemplary embodiment and the Examples, but the invention of this application is not limited to the above exemplary embodiment and Examples. Various changes that can be understood by those skilled in the art can be made in the configuration and details of the invention of this application within the scope of the claims of this application.

### Industrial Applicability

This exemplary embodiment can also be used, in addition, for energy storage devices, such as electric double layer capacitors and lithium ion capacitors.

### Reference Signs List

- 1: a positive electrode
- 2: an Al foil
- 3: a positive electrode active material both surface-coated portion
- 4: a positive electrode active material one surface-coated portion
- 5: a positive electrode active material-uncoated portion
- 6: a positive electrode conductive tab
- 7: a negative electrode
- 8: a Cu foil
- 9: a negative electrode active material both surface-coated portion
- 10: a negative electrode active material one surface-coated portion
- 11: a negative electrode active material-uncoated portion
- 12: a negative electrode conductive tab
- 13: a separator
- 14: a layer containing a positive electrode active material
- 15: a layer containing a negative electrode active material
- 21: a positive electrode current collector
- 22: a layer containing a positive electrode active material
- 23: a layer containing a negative electrode active material
- 24: a negative electrode current collector
- 25: a separator

## Claims

1. A non-aqueous electrolytic solution for a lithium ion secondary battery comprising at least an aprotic solvent, a compound represented by the following formula (1), and a compound represented by the following formula (2): 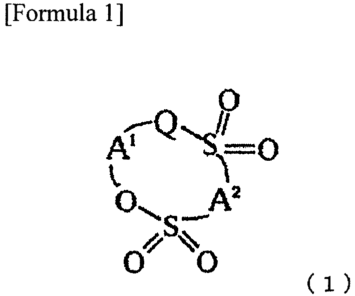 wherein Q represents an oxygen atom, a methylene group, or a single bond; A¹ represents an alkylene group having 1 to 5 carbon atoms, a carbonyl group, a sulfinyl group, a fluoroalkylene group having 1 to 6 carbon atoms, or a divalent group having 2 to 6 carbon atoms bonded to an alkylene unit or a fluoroalkylene unit via an ether bond; and A² represents an alkylene group, a fluoroalkylene group, or an oxygen atom, 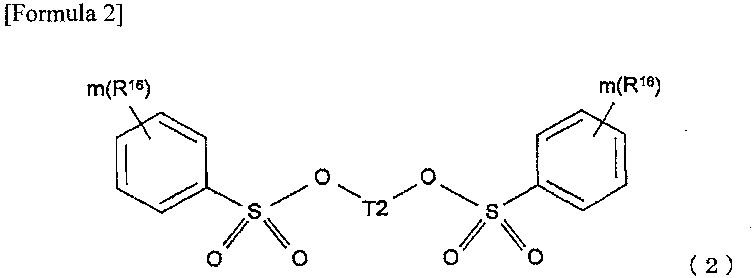
wherein T2 represents an alkylene group (CH₂)ₙ, and n is an integer of 1 to 4; and m(R¹⁶) each independently represents a halogen atom, an alkyl group having 1 to 6 carbon atoms, a haloalkyl group having 1 to 6 carbon atoms, an alkenyl group having 2 to 8 carbon atoms, an alkynyl group having 2 to 8 carbon atoms, or an aryl group, and m is each an integer of 0 to 3,
wherein the content of the compound represented by the formula (2) in the electrolytic solution is 0.05 % by mass or more and 1 % by mass or less,
and the compound of formula (2) is selected from compound nos. 202, 203, 204, 205, 206, 207, 208, 209, 210, 219, 228, 229, 230, 231, 232, 233, 234, 235, 236, 237, 238, 239, 240, 253, 254, 255, and 256 shown below:

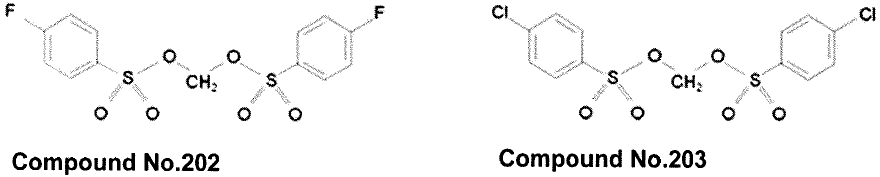

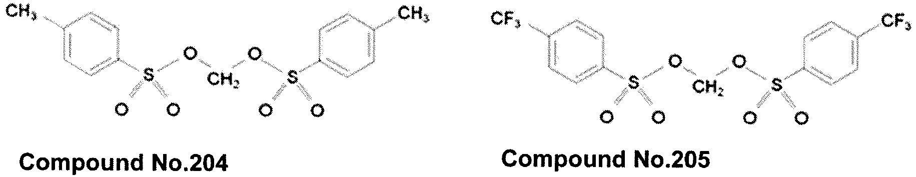

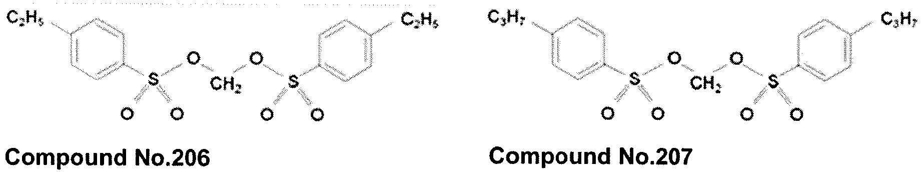

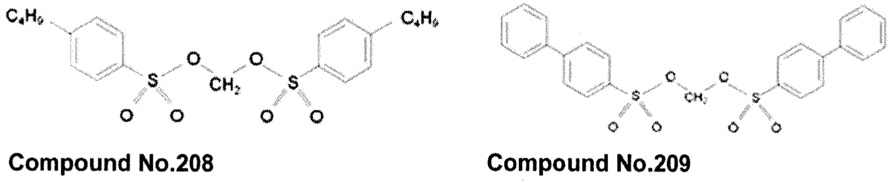

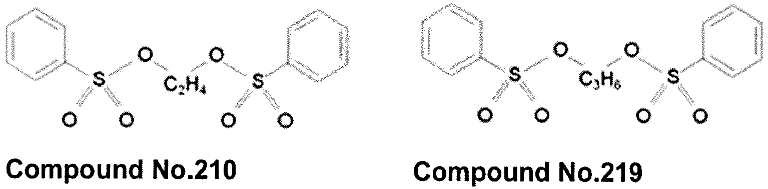

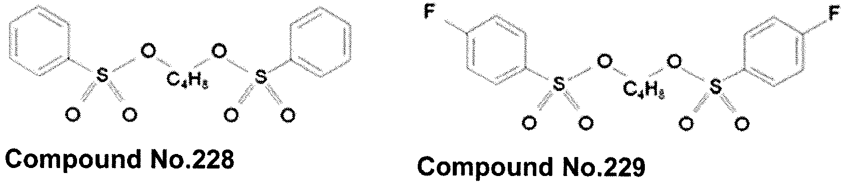

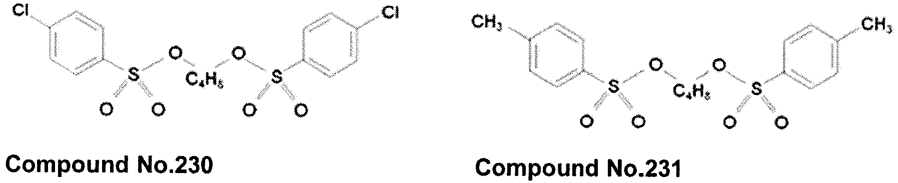

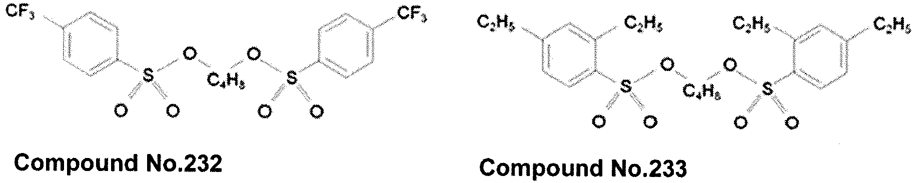

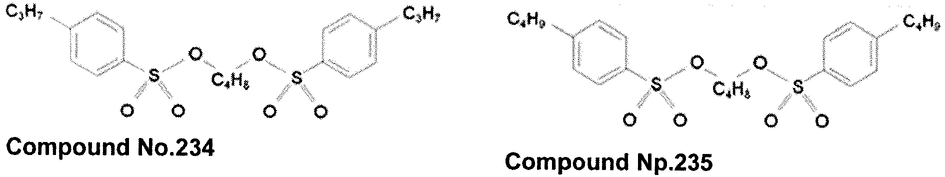

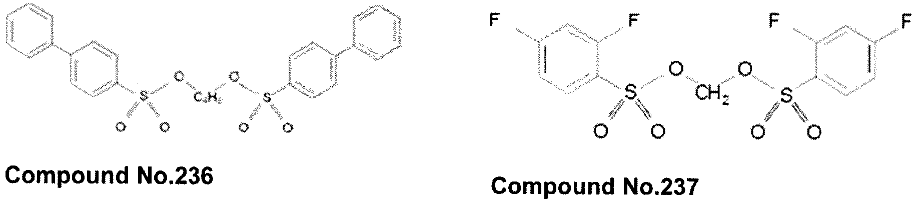

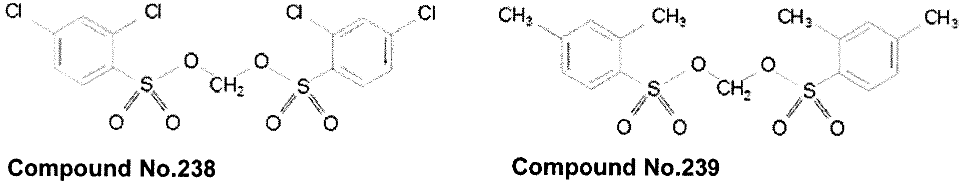

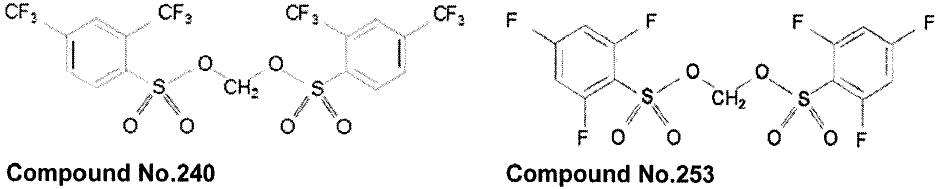

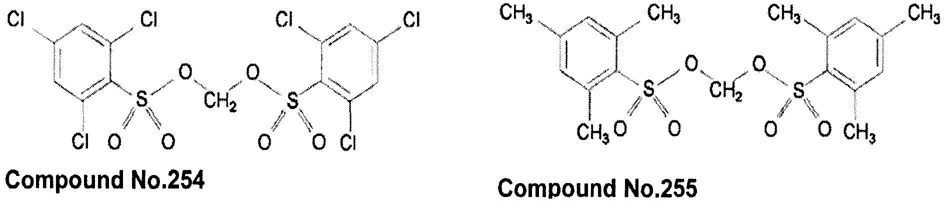

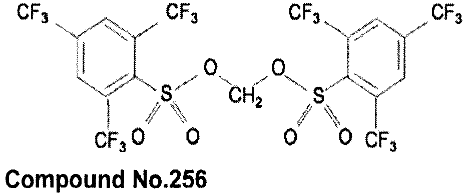

2. A non-aqueous electrolytic solution for a lithium ion secondary battery comprising at least an aprotic solvent, a compound represented by formula (1) as defined in claim 1, and a compound represented by the following formula (201): 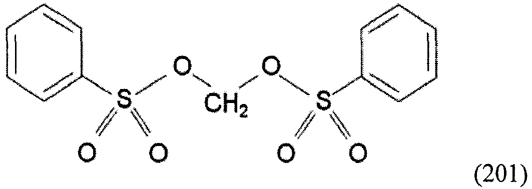 wherein the content of the compound represented by the formula (201) in the electrolytic solution is 0.05 % by mass or more and 0.5 % by mass or less,

3. The electrolytic solution for a lithium ion secondary battery according to claim 1 or 2, further comprising a chain disulfonate represented by the following formula (3): 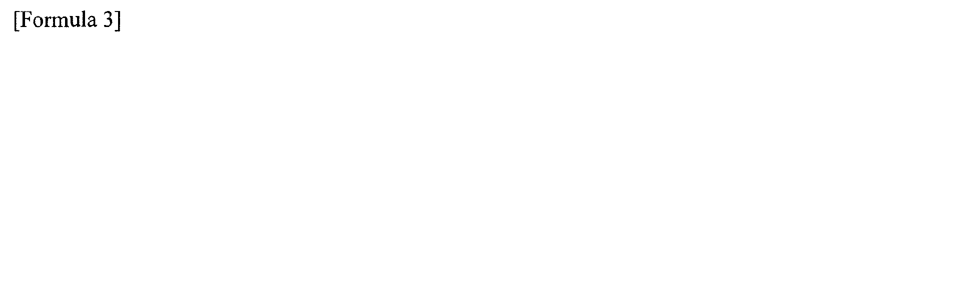 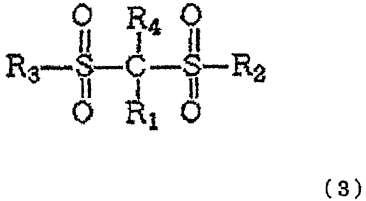 wherein R₁ and R₄ each independently represent one atom or group selected from the group consisting of a hydrogen atom, an alkyl group having 1 to 5 carbon atoms, an alkoxy group having 1 to 5 carbon atoms, a fluoroalkyl group having 1 to 5 carbon atoms, a perfluoroalkyl group having 1 to 5 carbon atoms, -SO₂X₉, wherein X₉ is an alkyl group having 1 to 5 carbon atoms, -SY₁, wherein Y₁ is an alkyl group having 1 to 5 carbon atoms, -COZ, wherein Z is a hydrogen atom or an alkyl group having 1 to 5 carbon atoms, and a halogen atom; and R₂ and R₃ each independently represent one atom or group selected from the group consisting of an alkyl group having 1 to 5 carbon atoms, an alkoxy group having 1 to 5 carbon atoms, a phenoxy group, a fluoroalkyl group having 1 to 5 carbon atoms, a perfluoroalkyl group having 1 to 5 carbon atoms, a fluoroalkoxy group having 1 to 5 carbon atoms, a perfluoroalkoxy group having 1 to 5 carbon atoms, a hydroxyl group, a halogen atom, -NX₁₀X₁₁, wherein X₁₀ and X₁₁ are each independently a hydrogen atom or an alkyl group having 1 to 5 carbon atoms, and -NY₂CONY₃Y₄, wherein Y₂ to Y₄ are each independently a hydrogen atom or an alkyl group having 1 to 5 carbon atoms.

4. The non-aqueous electrolytic solution for a lithium ion secondary battery according to any one of claims 1 to 3, further comprising a sultone compound represented by the following formula (4): 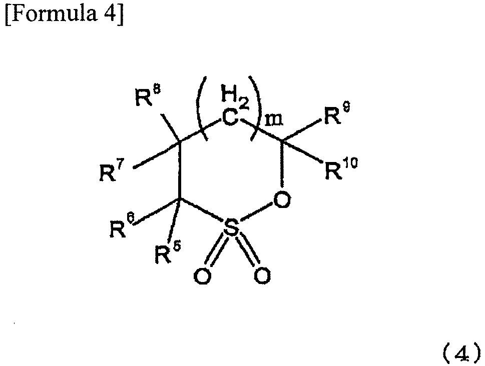 wherein R⁵ to R¹⁰ each independently represent one group selected from the group consisting of a hydrogen atom, an alkyl group having 1 or more and 12 or less carbon atoms, a cycloalkyl group having 3 or more and 6 or less carbon atoms, and an aryl group having 6 or more and 12 or less carbon atoms, and m is 0, 1, or 2.

5. The non-aqueous electrolytic solution for a lithium ion secondary battery according to any one of claims 1 to 4, wherein 10 % by mass or less of the compounds represented by the formulas (1) and (2) based on the entire electrolytic solution are comprised.

6. The non-aqueous electrolytic solution for a lithium ion secondary battery according to any one of claims 1, 3 or 4, wherein 0.1% by mass or more and 1% by mass or less of the compound represented by the formula (2) based on the entire electrolytic solution is comprised.

7. The non-aqueous electrolytic solution for a lithium ion secondary battery according to any one of claims 1 to 6, further comprising vinylene carbonate or a derivative thereof.

8. The non-aqueous electrolytic solution for a lithium ion secondary battery according to any one of claims 1 to 7, comprising a lithium salt as an electrolyte.

9. The non-aqueous electrolytic solution for a lithium ion secondary battery according to claim 8, wherein the lithium salt is at least one selected from the group consisting of LiPF₆, LiBF₄, LiAsF₆, LiSbF₆, LiClO₄, LiAlCl₄, and LiN(CₖF₂ₖ₊₁SO₂)(CₘF₂ₘ₊₁SO₂), wherein k and m are each independently 1 or 2.

10. The non-aqueous electrolytic solution for a lithium ion secondary battery according to any one of claims 1 to 9, wherein the aprotic solvent is at least one selected from the group consisting of cyclic carbonates, chain carbonates, aliphatic carboxylates, γ-lactones, cyclic ethers, chain ethers, and fluorinated derivatives thereof.

11. A lithium ion secondary battery comprising a positive electrode, a negative electrode, and a non-aqueous electrolytic solution according to any one of claims 1 to 10.

12. The lithium ion secondary battery according to claim 11, wherein the positive electrode comprises a lithium-containing complex oxide capable of intercalating and deintercalating lithium as a positive electrode active material.

13. The lithium ion secondary battery according to claim 12, wherein the lithium-containing complex oxide is a lithium manganese complex oxide having a spinel structure.

14. The lithium ion secondary battery according to any one of claims 11 to 13, wherein the negative electrode comprises carbon as a negative electrode active material.

15. The lithium ion secondary battery according to any one of claims 11 to 14, covered with a laminate package.

## Patentansprüche

1. Nichtwässrige Elektrolytlösung für eine Lithiumionensekundärbatterie, mit mindestens einem aprotischen Lösungsmittel, einer Verbindung, die durch die folgende Formel (1) dargestellt ist, und einer Verbindung, die durch die folgende Formel (2) dargestellt ist: 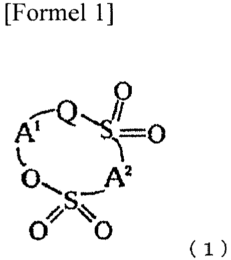 wobei Q ein Sauerstoffatom, eine Methylengruppe oder eine Einfachbindung darstellt; A¹ eine Alkylengruppe mit 1 bis 5 Kohlenstoffatomen, eine Carbonylgruppe, eine Sulfinylgruppe, eine Fluoralkylengruppe mit 1 bis 6 Kohlenstoffatomen oder eine zweiwertige Gruppe mit 2 bis 6 Kohlenstoffatomen darstellt, die über eine Etherbindung an eine Alkyleneinheit oder eine Fluoralkyleneinheit gebunden ist, und A² eine Alkylengruppe, eine Fluoralkylengruppe oder ein Sauerstoffatom darstellt, 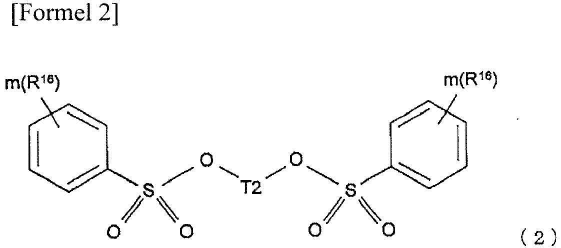
wobei T2 eine Alkylengruppe (CH₂)ₙ darstellt, wobei n eine ganze Zahl von 1 bis 4 ist, m (R¹⁶) jeweils unabhängig ein Halogenatom, eine Alkylgruppe mit 1 bis 6 Kohlenstoffatomen, eine Halogenalkylgruppe mit 1 bis 6 Kohlenstoffatomen, eine Alkenylgruppe mit 2 bis 8 Kohlenstoffatomen, eine Alkinylgruppe mit 2 bis 8 Kohlenstoffatomen oder eine Arylgruppe darstellt, und wobei m jeweils eine ganze Zahl von 0 bis 3 ist,
wobei der Gehalt der durch die Formel (2) dargestellten Verbindung in der Elektrolytlösung 0,05 Masse-% oder mehr und 1 Masse-% oder weniger beträgt,
und wobei die Verbindung der Formel (2) ausgewählt ist aus den nachstehend dargestellten Verbindungen Nr. 202, 203, 204, 205, 206, 207, 208, 209, 210, 219, 228, 229, 230, 231, 232, 233, 234, 235, 236, 237, 238, 239, 240, 253, 254, 255 und 256:

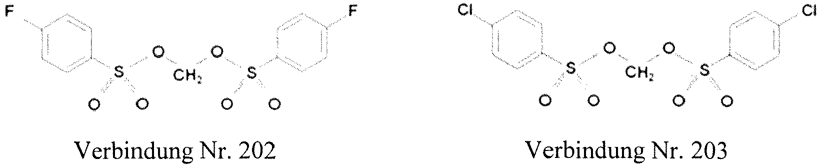

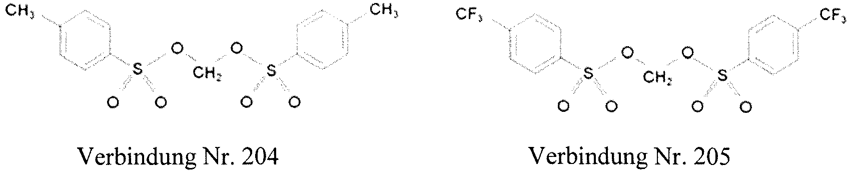

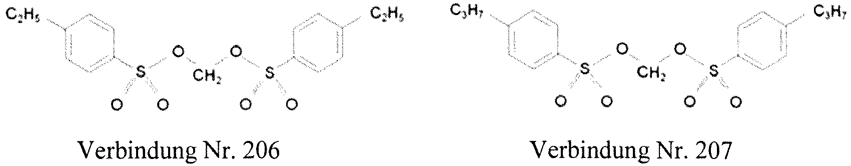

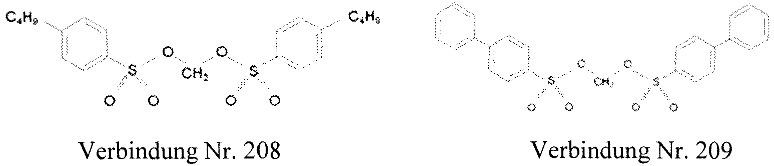

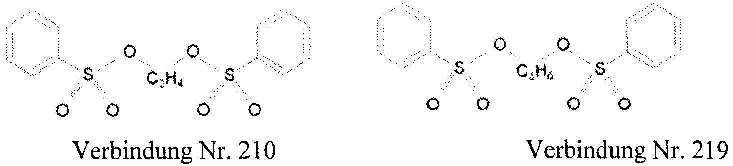

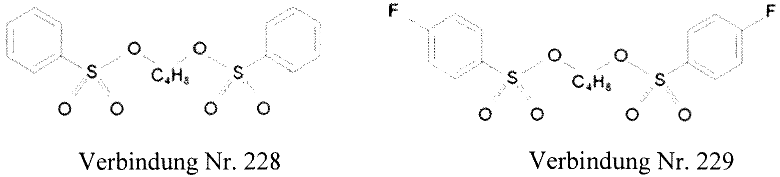

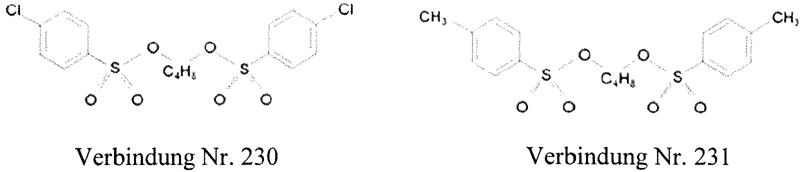

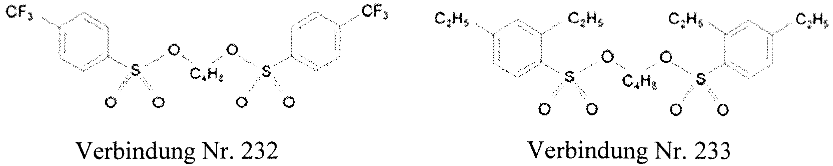

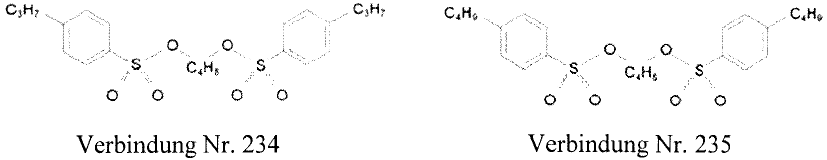

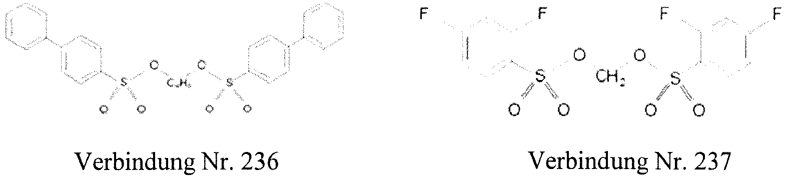

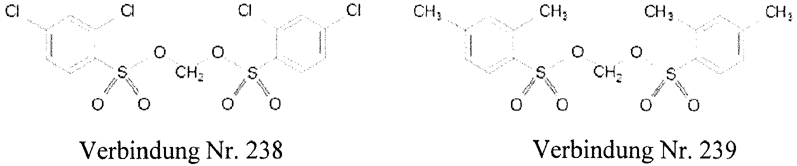

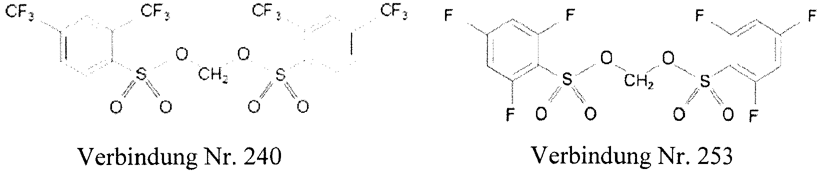

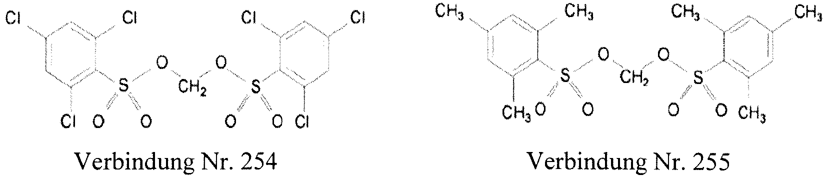

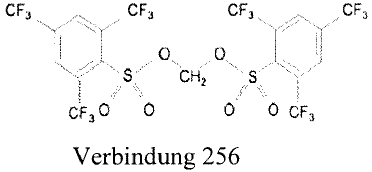

2. Nichtwässrige Elektrolytlösung für eine Lithiumionensekundärbatterie, mit mindestens einem aprotischen Lösungsmittel, einer durch Formel (1) dargestellten Verbindung, wie sie in Anspruch 1 definiert ist, und einer durch die folgende Formel (201) dargestellten Verbindung: 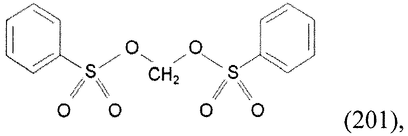 wobei der Gehalt der durch die Formel (201) dargestellten Verbindung in der Elektrolytlösung 0,05 Masse-% oder mehr und 0,5 Masse-% oder weniger beträgt.

3. Elektrolytlösung für eine Lithiumionensekundärbatterie nach Anspruch 1 oder 2, ferner mit einem durch die folgende Formel (3) dargestellten Kettendisulfonat: 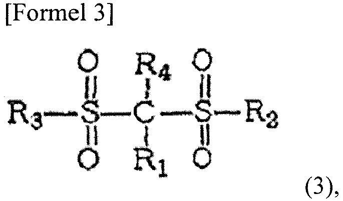 wobei R₁ und R₄ jeweils unabhängig voneinander ein Atom oder eine Gruppe darstellen, die ausgewählt ist aus der Gruppe bestehend aus einem Wasserstoffatom, einer Alkylgruppe mit 1 bis 5 Kohlenstoffatomen, einer Alkoxygruppe mit 1 bis 5 Kohlenstoffatomen, einer Fluoralkylgruppe mit 1 bis 5 Kohlenstoffatomen, einer Perfluoralkylgruppe mit 1 bis 5 Kohlenstoffatomen, -SO₂X₉, wobei X₉ eine Alkylgruppe mit 1 bis 5 Kohlenstoffatomen ist, -SY₁, wobei Y₁ eine Alkylgruppe mit 1 bis 5 Kohlenstoffatomen ist, -COZ, wobei Z ein Wasserstoffatom oder eine Alkylgruppe mit 1 bis 5 Kohlenstoffatomen ist, und einem Halogenatom, und wobei R₂ und R₃ jeweils unabhängig voneinander ein Atom oder eine Gruppe darstellen, das/die ausgewählt ist aus der Gruppe bestehend aus einer Alkylgruppe mit 1 bis 5 Kohlenstoffatomen, einer Alkoxygruppe mit 1 bis 5 Kohlenstoffatomen, einer Phenoxygruppe, einer Fluoralkylgruppe mit 1 bis 5 Kohlenstoffatomen, einer Perfluoralkylgruppe mit 1 bis 5 Kohlenstoffatomen, einer Fluoralkoxygruppe mit 1 bis 5 Kohlenstoffatomen, einer Perfluoralkoxygruppe mit 1 bis 5 Kohlenstoffatomen, einer Hydroxylgruppe, einem Halogenatom, -NX₁₀X₁₁, wobei X₁₀ und X₁₁ jeweils unabhängig voneinander ein Wasserstoffatom oder eine Alkylgruppe mit 1 bis 5 Kohlenstoffatomen darstellen, und -NY₂CONY₃Y₄, wobei Y₂ bis Y₄ jeweils unabhängig voneinander ein Wasserstoffatom oder eine Alkylgruppe mit 1 bis 5 Kohlenstoffatomen darstellen.

4. Nichtwässrige Elektrolytlösung für eine Lithiumionensekundärbatterie nach einem der Ansprüche 1 bis 3, ferner mit einer durch die folgende Formel (4) dargestellten Sultonverbindung: 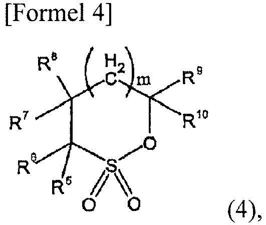 wobei R⁵ bis R¹⁰ jeweils unabhängig voneinander eine Gruppe darstellen, die ausgewählt ist aus der Gruppe bestehend aus einem Wasserstoffatom, einer Alkylgruppe mit 1 oder mehr und 12 oder weniger Kohlenstoffatomen, einer Cycloalkylgruppe mit 3 oder mehr und 6 oder weniger Kohlenstoffatomen und einer Arylgruppe mit 6 oder mehr und 12 oder weniger Kohlenstoffatomen, und wobei m 0, 1 oder 2 beträgt.

5. Nichtwässrige Elektrolytlösung für eine Lithiumionensekundärbatterie nach einem der Ansprüche 1 bis 4, wobei 10 Masse-% oder weniger der durch die Formeln (1) und (2) dargestellten Verbindungen basierend auf der gesamten Elektrolytlösung enthalten sind.

6. Nichtwässrige Elektrolytlösung für eine Lithiumionensekundärbatterie nach einem der Ansprüche 1, 3 oder 4, wobei 0,1 Masse-% oder mehr und 1 Masse-% oder weniger der durch die Formel (2) dargestellten Verbindung basierend auf der gesamten Elektrolytlösung enthalten sind.

7. Nichtwässrige Elektrolytlösung für eine Lithiumionensekundärbatterie nach einem der Ansprüche 1 bis 6, ferner mit Vinylencarbonat oder einem Derivat davon.

8. Nichtwässrige Elektrolytlösung für eine Lithiumionensekundärbatterie nach einem der Ansprüche 1 bis 7, mit einem Lithiumsalz als ein Elektrolyt.

9. Nichtwässrige Elektrolytlösung für eine Lithiumionensekundärbatterie nach Anspruch 8, wobei das Lithiumsalz mindestens ein Salz ist, das ausgewählt ist aus der Gruppe bestehend aus LiPF₆, LiBF₄, LiAsF₆, LiSbF₆, LiClO₄, LiAlCl₄ und LiN (CₖF₂ₖ₊₁SO₂)(CₘF₂ₘ₊₁SO₂), wobei k und m unabhängig voneinander 1 oder 2 betragen.

10. Nichtwässrige Elektrolytlösung für eine Lithiumionensekundärbatterie nach einem der Ansprüche 1 bis 9, wobei das aprotische Lösungsmittel mindestens ein Lösungsmittel ist, das ausgewählt ist aus der Gruppe bestehend aus cyclischen Carbonaten, Kettencarbonaten, aliphatischen Carboxylaten, γ-Lactonen, cyclischen Ethern, Kettenethern und fluorierten Derivaten davon.

11. Lithiumionensekundärbatterie mit einer positiven Elektrode, einer negativen Elektrode und einer nichtwässrigen Elektrolytlösung nach einem der Ansprüche 1 bis 10.

12. Lithiumionensekundärbatterie nach Anspruch 11, wobei die positive Elektrode ein lithiumhaltiges Komplexoxid aufweist, das in der Lage ist, Lithium als aktives Material für die positive Elektrode zu interkalieren und zu deinterkalieren.

13. Lithiumionensekundärbatterie nach Anspruch 12, wobei das lithiumhaltige Komplexoxid ein Lithiummangankomplexoxid mit einer Spinellstruktur ist.

14. Lithiumionensekundärbatterie nach einem der Ansprüche 11 bis 13, wobei die negative Elektrode Kohlenstoff als aktives Material für die negative Elektrode aufweist.

15. Lithiumionensekundärbatterie nach einem der Ansprüche 11 bis 14, die mit einer Laminatpackung abgedeckt ist.

## Revendications

1. Solution électrolytique non aqueuse pour une batterie secondaire au lithium ion comprenant au moins un solvant aprotique, un composé représenté par la formule (1) suivante, et un composé représenté par la formule (2) suivante : 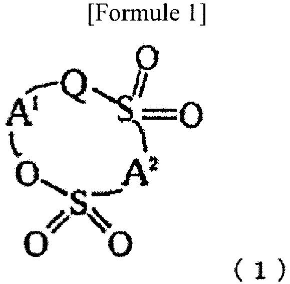 dans laquelle Q représente un atome d'oxygène, un groupe méthylène, ou une liaison simple ; A¹ représente un groupe alkylène ayant 1 à 5 atomes de carbone, un groupe carbonyle, un groupe sulfinyle, un groupe fluoroalkylène ayant 1 à 6 atomes de carbone, ou un groupe divalent ayant 2 à 6 atomes de carbone lié à un motif alkylène ou à un motif fluoroalkylène via une liaison éther ; et A² représente un groupe alkylène, un groupe fluoroalkylène, ou un atome d'oxygène, 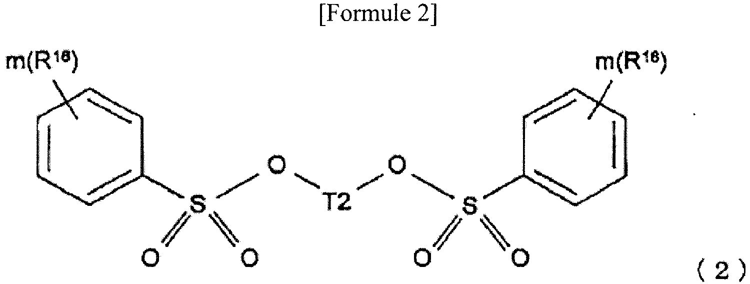
dans laquelle T2 représente un groupe alkylène (CH₂)ₙ, et n est un nombre entier allant de 1 à 4 ; et les m(R¹⁶) représentent chacun indépendamment un atome d'halogène, un groupe alkyle ayant 1 à 6 atomes de carbone, un groupe haloalkyle ayant 1 à 6 atomes de carbone, un groupe alcényle ayant 2 à 8 atomes de carbone, un groupe alcynyle ayant 2 à 8 atomes de carbone, ou un groupe aryle, et m est chacun un nombre entier allant de 0 à 3,
dans laquelle la teneur du composé représenté par la formule (2) dans la solution électrolytique est de 0,05 % en masse ou plus et 1 % en masse ou moins,
et le composé de formule (2) est sélectionné parmi les composés no. 202, 203, 204, 205, 206, 207, 208, 209, 210, 219, 228, 229, 230, 231, 232, 233, 234, 235, 236, 237, 238, 239, 240, 253, 254, 255, et 256 représentés ci-dessous :

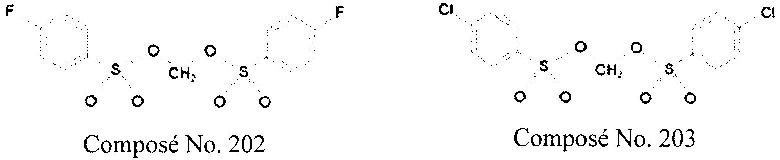

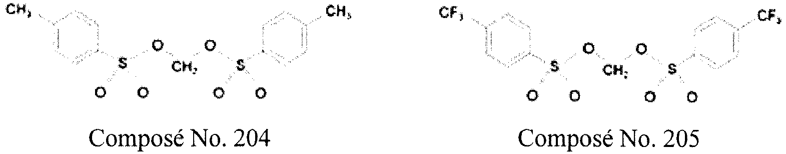

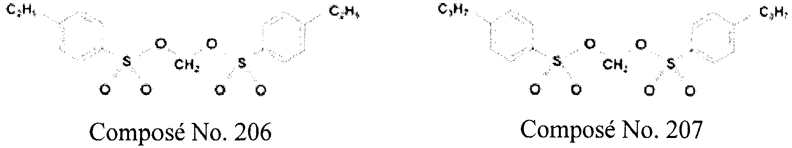

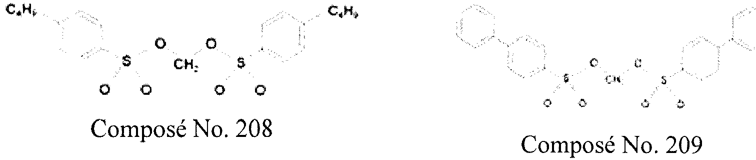

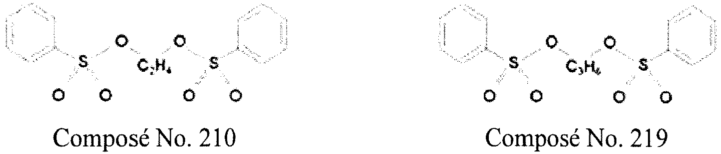

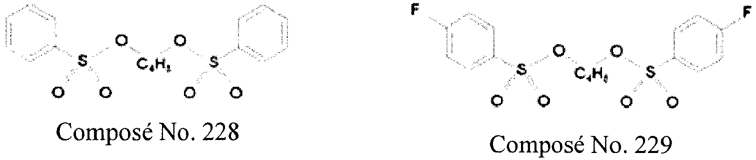

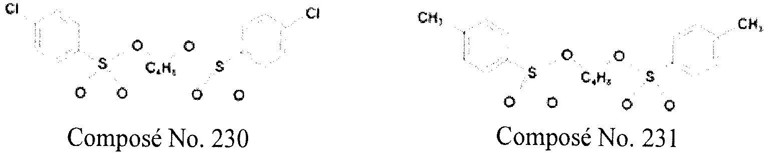

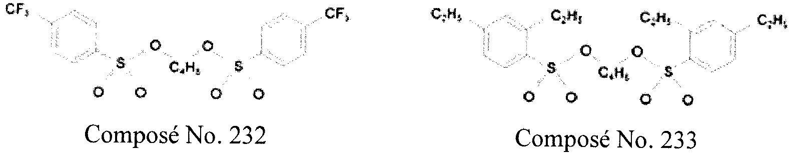

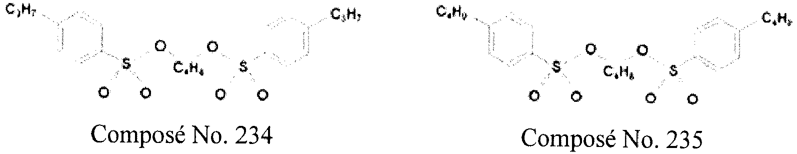

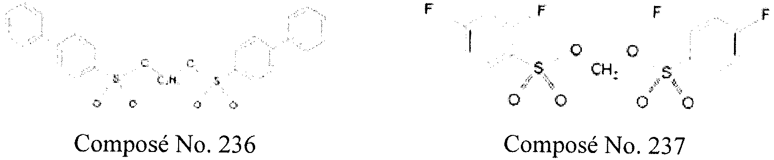

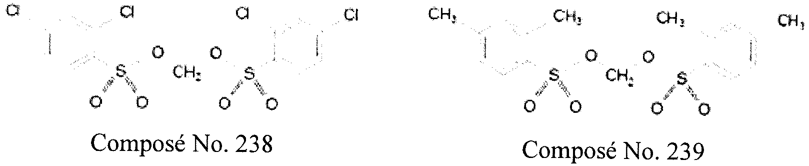

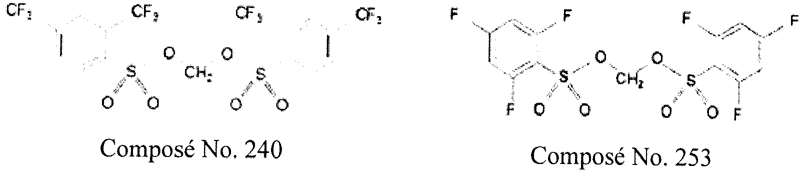

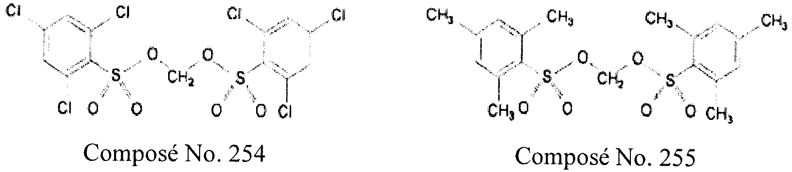

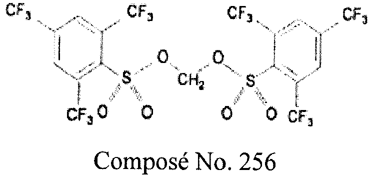

2. Solution électrolytique non aqueuse pour une batterie secondaire au lithium ion comprenant au moins un solvant aprotique, un composé représenté par la formule (1) telle que définie dans la revendication 1, et un composé représenté par la formule (201) suivante : 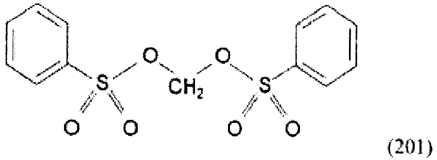 dans laquelle la teneur du composé représenté par la formule (201) dans la solution électrolytique est de 0,05 % en masse ou plus et 0,5 % en masse ou moins.

3. Solution électrolytique pour une batterie secondaire au lithium ion selon la revendication 1 ou 2, comprenant en outre un disulfonate à chaîne représenté par la formule (3) suivante : 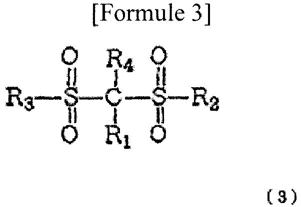 dans laquelle R₁ et R₄ représentent chacun indépendamment un atome ou un groupe sélectionné dans le groupe constitué d'un atome d'hydrogène, d'un groupe alkyle ayant 1 à 5 atomes de carbone, d'un groupe alcoxy ayant 1 à 5 atomes de carbone, d'un groupe fluoroalkyle ayant 1 à 5 atomes de carbone, d'un groupe perfluoroalkyle ayant 1 à 5 atomes de carbone, de -SO₂X₉, dans laquelle X₉ est un groupe alkyle ayant 1 à 5 atomes de carbone, de -SY₁, dans laquelle Y₁ est un groupe alkyle ayant 1 à 5 atomes de carbone, de -COZ, dans laquelle Z est un atome d'hydrogène ou un groupe alkyle ayant 1 à 5 atomes de carbone, et d'un atome d'halogène ; et R₂ et R₃ représentent chacun indépendamment un atome ou un groupe sélectionné dans le groupe constitué d'un groupe alkyle ayant 1 à 5 atomes de carbone, d'un groupe alcoxy ayant 1 à 5 atomes de carbone, d'un groupe phénoxy, d'un groupe fluoroalkyle ayant 1 à 5 atomes de carbone, d'un groupe perfluoroalkyle ayant 1 à 5 atomes de carbone, d'un groupe fluoroalcoxy ayant 1 à 5 atomes de carbone, d'un groupe perfluoroalcoxy ayant 1 à 5 atomes de carbone, d'un groupe hydroxyle, d'un atome d'halogène, de -NX₁₀X₁₁, dans laquelle X₁₀ et X₁₁ sont chacun indépendamment un atome d'hydrogène ou un groupe alkyle ayant 1 à 5 atomes de carbone, et de -NY₂CONY₃Y₄, dans laquelle Y₂ à Y₄ sont chacun indépendamment un atome d'hydrogène ou un groupe alkyle ayant 1 à 5 atomes de carbone.

4. Solution électrolytique non aqueuse pour une batterie secondaire au lithium ion selon l'une quelconque des revendications 1 à 3, comprenant en outre un composé de sultone représenté par la formule (4) suivante : 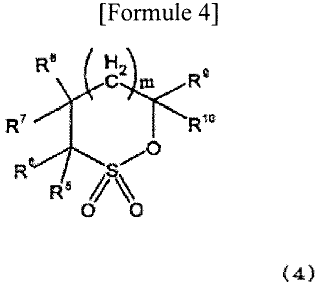 dans laquelle R⁵ à R¹⁰ représentent chacun indépendamment un groupe sélectionné dans le groupe constitué d'un atome d'hydrogène, d'un groupe alkyle ayant 1 ou plus et 12 ou moins atomes de carbone, d'un groupe cycloalkyle ayant 3 ou plus et 6 ou moins atomes de carbone, et d'un groupe aryle ayant 6 ou plus et 12 ou moins atomes de carbone, et m est 0, 1, ou 2.

5. Solution électrolytique non aqueuse pour une batterie secondaire au lithium ion selon l'une quelconque des revendications 1 à 4, dans laquelle 10 % en masse ou moins des composés représentés par les formules (1) et (2) sur la base de la solution électrolytique entière sont compris.

6. Solution électrolytique non aqueuse pour une batterie secondaire au lithium ion selon l'une quelconque des revendications 1, 3 ou 4, dans laquelle 0,1 % en masse ou plus et 1 % en masse ou moins du composé représenté par la formule (2) sur la base de la solution électrolytique entière est compris.

7. Solution électrolytique non aqueuse pour une batterie secondaire au lithium ion selon l'une quelconque des revendications 1 à 6, comprenant en outre du carbonate de vinylène ou un dérivé de celui-ci.

8. Solution électrolytique non aqueuse pour une batterie secondaire au lithium ion selon l'une quelconque des revendications 1 à 7, comprenant un sel de lithium en tant qu'électrolyte.

9. Solution électrolytique non aqueuse pour une batterie secondaire au lithium ion selon la revendication 8, dans laquelle le sel de lithium est au moins l'un sélectionné dans le groupe constitué de LiPF₆, LiBF₄, LiAsF₆, LiSbF₆, LiClO₄, LiAlCl₄, et LiN(CₖF₂ₖ₊₁SO₂)(CₘF₂ₘ₊₁SO₂), dans laquelle k et m sont chacun indépendamment 1 ou 2.

10. Solution électrolytique non aqueuse pour une batterie secondaire au lithium ion selon l'une quelconque des revendications 1 à 9, dans laquelle le solvant aprotique est au moins l'un sélectionné dans le groupe constitué des carbonates cycliques, des carbonates à chaîne, des carboxylates aliphatiques, des γ-lactones, des éthers cycliques, des éthers à chaîne, et des dérivés fluorés de ceux-ci.

11. Batterie secondaire au lithium ion comprenant une électrode positive, une électrode négative, et une solution électrolytique non aqueuse selon l'une quelconque des revendications 1 à 10.

12. Batterie secondaire au lithium ion selon la revendication 11, dans laquelle l'électrode positive comprend un oxyde complexe contenant du lithium capable d'intercaler et de désintercaler le lithium en tant que matériau actif d'électrode positive.

13. Batterie secondaire au lithium ion selon la revendication 12, dans laquelle l'oxyde complexe contenant du lithium est un oxyde complexe de lithium-manganèse ayant une structure de spinelle.

14. Batterie secondaire au lithium ion selon l'une quelconque des revendications 11 à 13, dans laquelle l'électrode négative comprend du carbone en tant que matériau actif d'électrode négative.

15. Batterie secondaire au lithium ion selon l'une quelconque des revendications 11 à 14, recouverte d'un boîtier stratifié.
